# EUROPEAN PATENT SPECIFICATION

(11) **EP 1 403 176 B1**
(45) Date of publication and mention of the grant of the patent: **18.04.2007**
(21) Application number: 03103391.3
(22) Date of filing: 15.09.2003
(51) Int. Cl.: B62D 65/00

(54) **A method of engineering a process line for a flexible manufacturing system**
Verfahren zum Konstruieren einer Produktionslinie in einem flexiblen Herstellungssystem
Méthode de constitution d'une chaîne de production pour un système flexible de fabrication

(30) Priority: 24.09.2002 US 253748
(43) Date of publication of application: 31.03.2004
(73) Proprietor: FORD MOTOR COMPANY, Dearborn, MI 48126 (US)
(72) Inventor: Ghuman, Abid, 48301, Bloomfield Hills (US); Sanborn, Kirk E., Michigan 48316 (US); Rosso, Marsha J., Michigan 48067 (US); Lowe, James Wayne, Michigan 48182 (US)
(74) Representative: Messulam, Alec Moses

(56) References cited:
- EP-A- 0 308 248
- EP-A- 1 059 222
- EP-A- 1 241 085
- CA-A- 2 389 824
- US-A- 4 860 663
- US-A- 6 098 268
- US-A1- 2002 100 158

## Description

The field of the present invention is process lines for fabricating an assembly from a plurality of subassemblies generated from various workpieces. The inventive method of the present invention is particularly useful in the development of process lines for automotive vehicle body assemblies.

Originally, vehicle bodies were carriages fabricated from wood and leather. Hence the term "horseless carriage" came to describe automobiles. Subsequently, vehicles were developed having a steel frame chassis which was connected with the drive train of the vehicle. A steel vehicle body was then mated with the chassis.

Initially, steel vehicle bodies were connected together primarily by rivets and threaded fasteners. Welding was not an option in many situations since the sheet metal was too thin to absorb the heat of most welding techniques. In the mid-20^{th} century a welding technique was developed which could weld together relatively thin overlapping members of sheet metal, commonly referred to as spot welding.

In spot welding, a weld gun compresses a small portion of a joint of overlapping workpieces of sheet metal and applies pressure. Thereafter, an electric charge is delivered through the joint. The joint is heated until the metal of the joint is partially melted. The electric charge is stopped and the joint is allowed to cool wherein the metal of the two sheet metal workpieces is fused together.

The development of spot welding facilitated a tremendous advancement in vehicle body design. Now, structural components of the body could be fabricated from sheet metal which was folded into a desired tubular or other structural form, and then be welded together to form a structural beam. Therefore, the utilization of heavier plate members to provide the structural components of the vehicle body could be minimized.

Initially, most spot welding of vehicles was performed with equipment which could be either manipulated manually or via manual controls. In the early 1980s more and more equipment became available so that the spot welding function could be done robotically. Typically, the process lines which form a body is referred to as a body shop and are part of an assembly plant. The body shop typically receives stamped workpieces from a stamping facility which may be an on-site facility or a plant that is distantly located and serves several assembly facilities.

Typically, each vehicle line has its own body shop. When an automotive vehicle is updated for a major redesign, the body shop is typically scrapped and a new body shop is built from scratch within the assembly plant facility.

The paint shop of an automotive vehicle assembly plant which receives the body, typically is utilized over and over again. However, the body shop is typically rebuilt and is therefore a tremendous consumer of tooling capital. This expenditure of tooling capital not only reduces profits, but also discourages model changeover. The lack of model changeover often causes a lack of consumer demand.

Therefore, body shop capital costs generate a vicious cycle which can lead to very negative financial results for a vehicle manufacturer.

Another reason why the body shop consumes a large amount of capital is that the body shop has typically been customized to a given vehicle. Therefore, in most instances vehicles which are dissimilar in size and function cannot be made on a common body process line. Even vehicles which are the same, but are built in geographically separated assembly locations typically have different body process lines since the process lines are typically built to accommodate a specific assembly plant specific.

The lack of flexibility of body process lines not only leads to increased capital cost, but is also less efficient in the utilization of maintenance equipment and purchasing. Maintenance and the associated training cost of operational personnel is also increased. Attempts have been made to provide more flexible equipment, but most of these attempts have dwelt on variation in the path programming of robotic operations and the utilization of robots whose end effecters can be modified. This has generally not saved money and time.

An example of the prior art is shown in document US6098268; This document describes a modular workshop organisation with standard pattern modules with standardised stations to rationalize an assembly line, since they can be standard regardless of the type of sheet metal assembly to be constructed. Stations are capable of assembling two different subassemblies.

It is desirable to provide a process line where the process line can accommodate a vehicle after a major redesign with a minimum capital cost.

It is an object of this invention to provide method for engineering a process line with greater flexibility so that a wider range of vehicle bodies can be processed on the same processing line.

According to a first aspect of the invention there is provided a method of engineering a flexible process line capable of producing at least two assemblies differing from one another from a plurality of subassemblies generated from various workpieces characterised in that the method comprises providing a plurality of standardized task stations, determining at least first and second templates, each template comprising a pre-defined set of task stations for producing a subassembly, each of the task stations in a pre-defined set being unique from all other task stations in the predefined set and at least one of the task stations has a workpiece presenter with tooling plates to fixture at least a first workpiece and a second workpiece differing from the first workpiece and at least one of the task stations is capable of changing from tooling utilized to operate on a first assembly workpiece to tooling utilized to operate on a second assembly workpiece, arranging the task stations in a predetermined order and combining at least said first and second templates in a predetermined alignment to form said process line to fabricate said assembly.

The method may further comprise the steps of determining a plurality of transfer stations to move assembly parts between the task stations, determining a plurality of transfer stations to move assembly parts between the templates, determining a placement of a storage station between task stations and determining a placement of a storage station between templates of the process line.

The method may be a method for fabricating an automotive vehicle body assembly from a plurality of subassemblies generated from various workpieces and at least one of the task stations includes a workpiece presenter for fixturing a workpiece of a vehicle sub-assembly, the workpiece presenter including a platform and a tooling plate removably connected to the platform, the tooling plate including a planar body for supporting fixture tools holding the workpiece and including a connector mechanism to allow the planar body to be removably connected with the platform and the tooling plate having a three axis abutment system heel which locates the planar body with respect to the platform in a repeatable manner and wherein the task station joins at least first and second workpieces together.

The step of providing a plurality of standardized task stations may further include the step of providing a limited number of standardized stations, with at least one of the standardized stations comprising at least one workpiece presenter with at least one tooling plate removably connected to the workpiece presenter.

The method may further comprise providing a plurality of tooling plates on the workpiece presenter.

According to a second aspect of the invention there is provided a manufacturing system for making an assembly from a plurality of workpieces characterised in that the system comprises a plurality of templates arranged in a defined sequence such that a portion of the assembly is formed at each template, each template being formed from a set of standardized task stations, each of the task stations in the set being unique from all other task stations in the set and each of the task stations being aligned in a predetermined order to form a process line to fabricate the assembly, each standardized task station having a workpiece presenter that supports the workpiece in a predefined spatial orientation and a processing tool for performing an operation on the workpiece.

There may be sixteen unique task stations, in which case, the sixteen tasks stations may comprise a first task station in which the workpiece presenter includes a table top fixture having a tilt platform and the processing tool is selected from a group comprising of a welder and a gripper, a second task station in which the standardized workpiece presenter includes a hexapod manipulator having six electrically driven computer controlled ball screws and the processing tool is selected from a group comprising of a pedestal welder, a sealant dispensing unit and a projection weld gun, a third task station in which the workpiece presenter is a robot for positioning a workpiece and the processing tool is selected from a group comprising a pedestal welder, a sealant dispensing unit and a projection weld gun, a fourth task station is a dual task station having a seventh axis slide to increase the work envelope of a robot and the processing tool is a welding gun, a fifth task station in which the workpiece presenter includes a multiple sided trunnion fixture adapted to rotate about a horizontal axis and having a plurality of fixtures for receiving a plurality of workpieces and the processing tool is selected from the group comprising a welding robot and a sealant applicator, a sixth task station in which the standardized workpiece presenter includes a multiple sided turntable fixture adapted to rotate about a vertical axis and having a plurality of fixtures for a plurality of workpieces and the processing tool is a robotic welder, a seventh task station in which the workpiece presenter includes an indexing shuttle having at least two independently controlled fixtures for at least two workpieces and the processing tool is selected from a group comprising of a welding robot, a machining robot and a sealing robot, an eighth task station in which the workpiece presenter includes a roller bed for supporting a pallet that supports a fixture for a workpiece and the standardized processing tool is a laser welding robot, a ninth task station in which the workpiece presenter includes a press welding fixture, a tenth task station in which the workpiece presenter is a robotic handler and the processing tool is selected from a group comprising a hemming tool, a clinching tool and a piercing tool, an eleventh task station in which the workpiece presenter includes an indexing shuttle and a sliding tool plate disposed on the indexing shuttle and the processing tool is selected from a group comprising a welding robot, a material handling robot, a sealant dispenser and an adhesive dispenser, a twelfth task station in which the workpiece presenter includes a pallet that is received on a roller bed and the processing tool is an optical measuring device, a thirteenth task station which is a sealer applying task station in which the workpiece presenter includes a pallet that is received on a roller bed and the processing tool is selected from a group comprising a sealant dispenser, a mastic dispenser and an adhesive dispenser, a fourteenth task station which is a welding station in which the workpiece presenter includes dual shuttling tooling plates mounted on a shuttle drive, a fifteenth task station in which the workpiece presenter includes a pallet that is received on a roller bed and the standardized processing tool is a welding robot, sealing robot or adhesive application robot and a sixteenth task station is a framer for joining a vehicle body side to an underbody and the workpiece presenter is a pallet on a roller bed.

The system may further comprise a storage station adapted to couple at least two standardized task stations.

The system may further comprise a transfer station adapted to move the assembly between at least two standardized task stations.

The assembly may be an automotive vehicle.

The process line may be a flexible process line capable of producing at least two assemblies differing from one another.

At least one of the task stations may have a workpiece presenter with tooling plates to fixture at least a first workpiece and a second workpiece differing from the first workpiece.

At least one of the task stations may be capable of changing from tooling utilized to operate on a first assembly workpiece to tooling utilized to operate on a second assembly workpiece.

The system may further include a limited number of standardized stations, with at least one of the standardized stations comprising at least one workpiece presenter with at least one tooling plate removably connected to the workpiece presenter.

The system may further comprise a plurality of transfer stations to move assembly parts between the task stations.

The system may further comprise a plurality of transfer stations to move assembly parts between the templates.

The system may further comprise a storage station between task stations of the process line.

The system may further comprise a storage station between templates of the process line.

The system may further comprise providing a plurality of tooling plates on the workpiece presenter.

The invention will now be described by way of example with reference to the accompanying drawing of which:-
Figures 1, 2 and 3 are perspective views of a trunnion used in the flexible manufacturing system of the present invention;
Figures 1A and 4 are perspective views of the tooling plate utilized with the trunnion shown in Figure 1;
Figure 5 is a perspective view of a three sided trunnion;
Figures 6 and 7 are perspective views of the locater heel blocks utilized in the aforementioned tooling plates and trunnions;
Figure 8 is a perspective view of a turntable;
Figure 9 is a perspective view of a task station of the present invention;

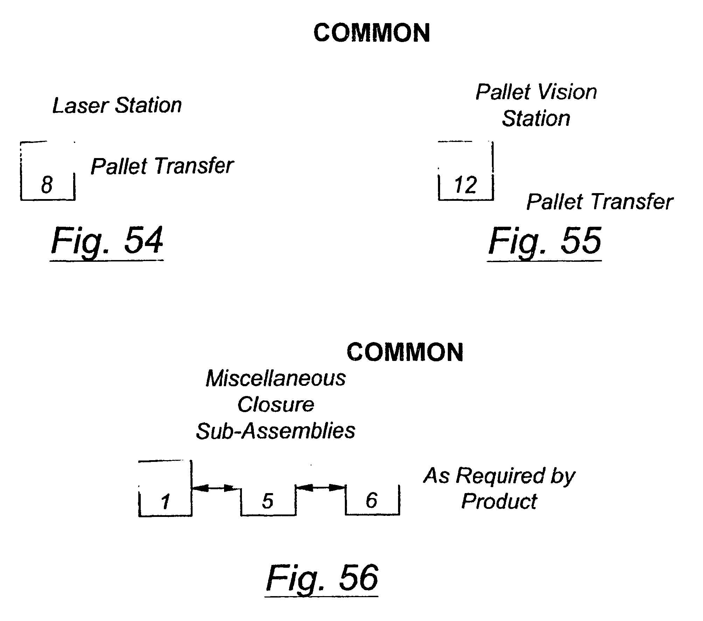

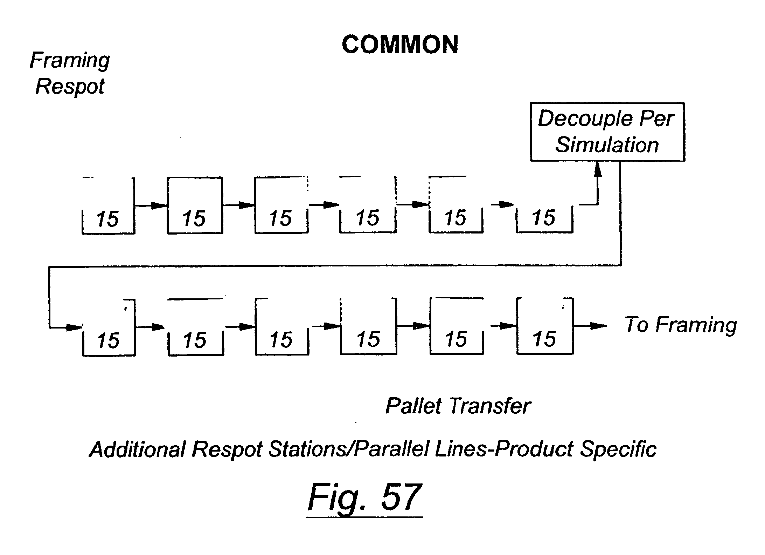

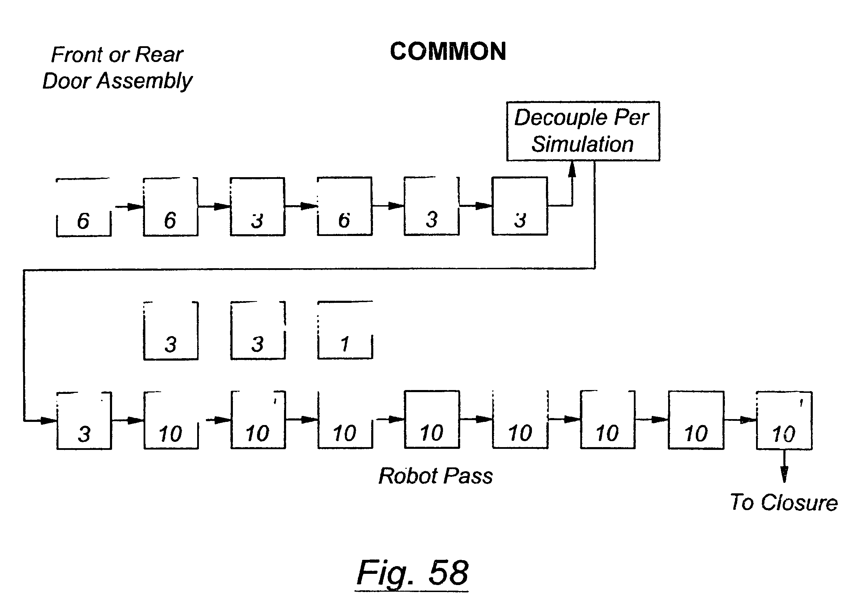

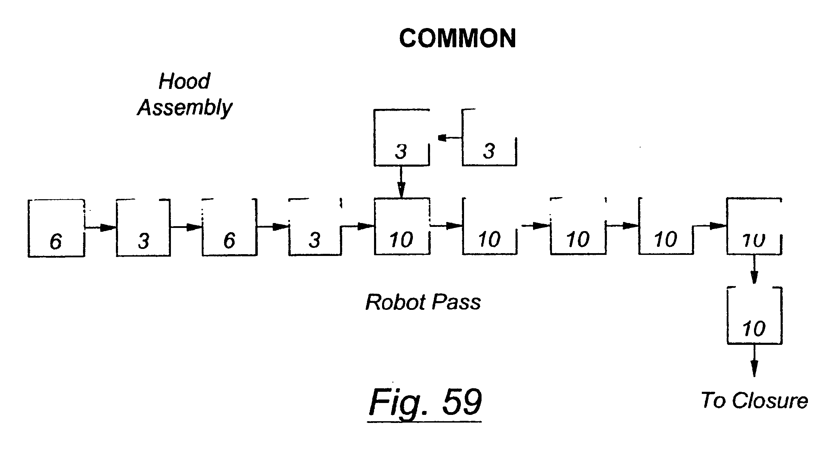

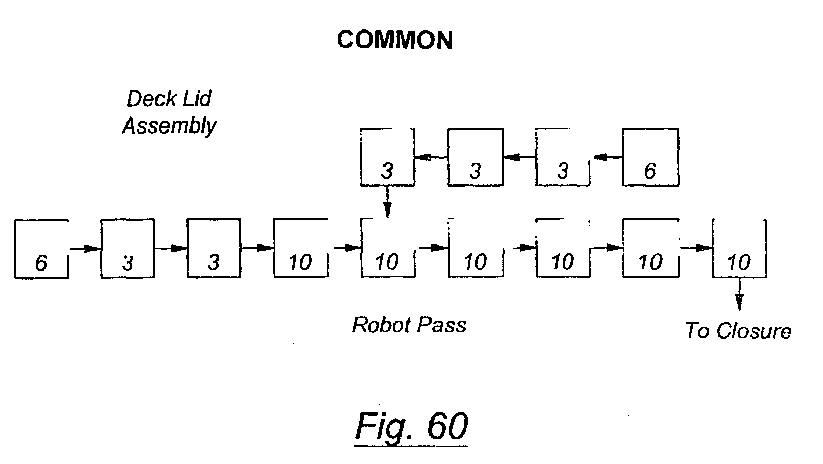

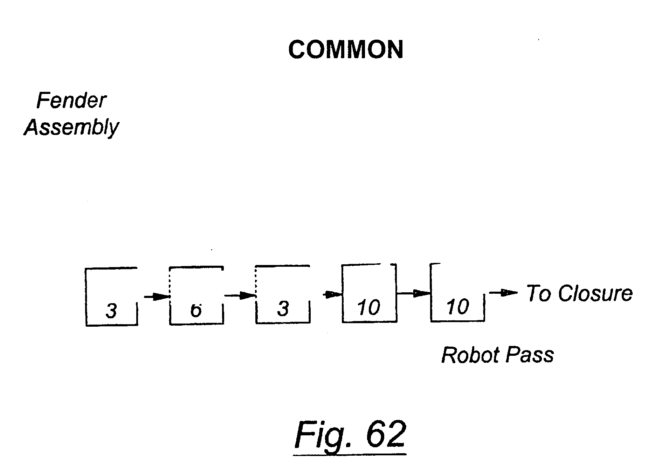

Figures 10-62 are templates of defined sets of task stations of the manufacturing system of the present invention;
Figures 63-78 illustrate various task stations of the manufacturing system of the present invention;
Figures 79-87 list templates that are discrete to passenger cars;
Figures 88-106 list templates that are discrete to trucks;
Figures 107-120 and 122-132 list templates which are common to both cars and trucks;
Figures 133-140 illustrate transfer task stations in the manufacturing system of the present invention;
Figure 141 is an enlargement of a portion of Figure 1;
Figure 142 illustrates a pallet type transfer station with a turntable;
Figures 143-145 graphically illustrate a process line for producing an automotive vehicle car body;
Figures 146-149 graphically illustrate a process line for a truck-like vehicle; and
Figures 150-152 illustrate vehicle bodies for a rear wheel drive truck, a uniframe passenger front wheel drive vehicle and a rear body on frame chassis type vehicle respectively.

The flexible manufacturing system of the present invention is demonstrated in the environment of a weld process line for assembling a body of an automotive vehicle. Metal components of the body assembly for an automotive vehicle are first acted upon in a metal stamping facility. In some instances, the stamping facility will be located next to a vehicle assembly plant. However, most automotive manufacturers have fewer stamping facilities than assembly facilities. Therefore, often the stamped metal workpieces are shipped by rail or truck to an assembly plant.

Upon arrival at the assembly plant, the stamped workpieces are delivered to the body shop of the assembly facility. In the body shop, the body shell of the vehicle is assembly primarily on a weld processing line as will be further explained. After the body shell of the vehicle has been assembled in the weld processing line, the body is delivered to the paint shop of the assembly plant, wherein the body is painted. Often, a prime coat applied to the body shell is white; hence the term body-in-white is often utilized when referring to the body assembly.

After the prime coat has been applied the body is then color-coated and typically, multiple clear coats of paint are applied over the color coat. The painted body is later married with the chassis components and the powertrain which is inclusive of the engine, the transmission and final drive shafts. At this time, in a body-on-frame type vehicle, the body will be married to the frame. The vehicle is typically then delivered to the trim portion of the assembly plant wherein the interior components and the seating are added to the vehicle.

An example of the flexible manufacturing method of the present invention includes engineering to provide an automotive vehicle body wherein components are primarily joined together by welding processes. The process line produces an automotive vehicle from a plurality of subassemblies which are generated from various combinations of workpieces. The process line is provided by a plurality of standardized task stations. To enjoy the greatest benefit from the present invention, the number of different task stations is limited.

At least one of the task stations in a given process line has a workpiece presenter. The workpiece presenter has a platform which in some instances, can move. Connected to the platform in a repeatable manner and precision located thereon, is a tooling plate. To produce a given subassembly of a vehicle body a determination is made to define a set of task stations, which is referred to as a template. A combination of at least two or more templates is aligned in a predetermined manner to form a process line which fabricates the body assembly.

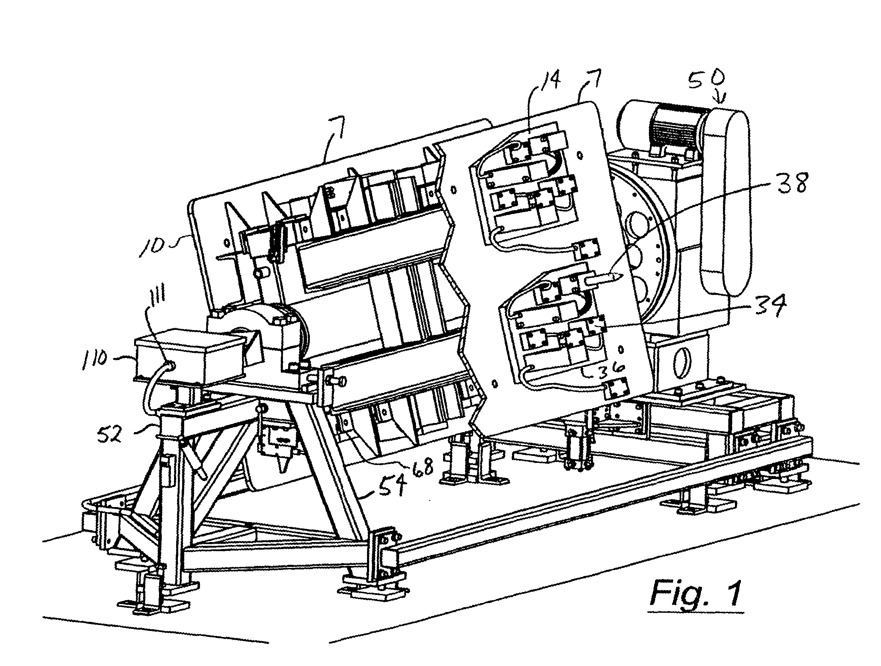

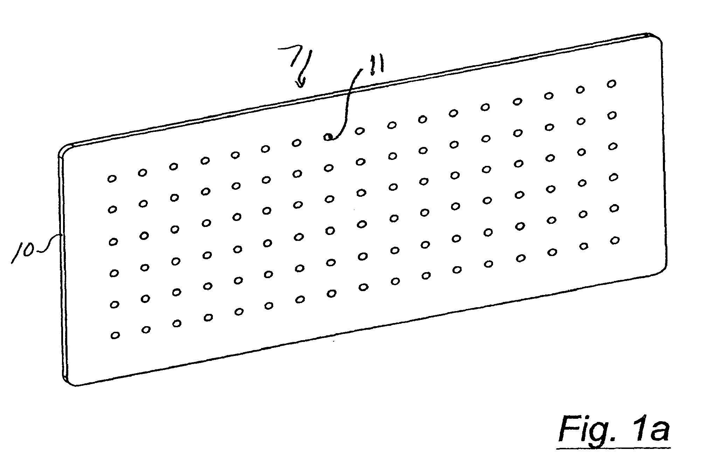

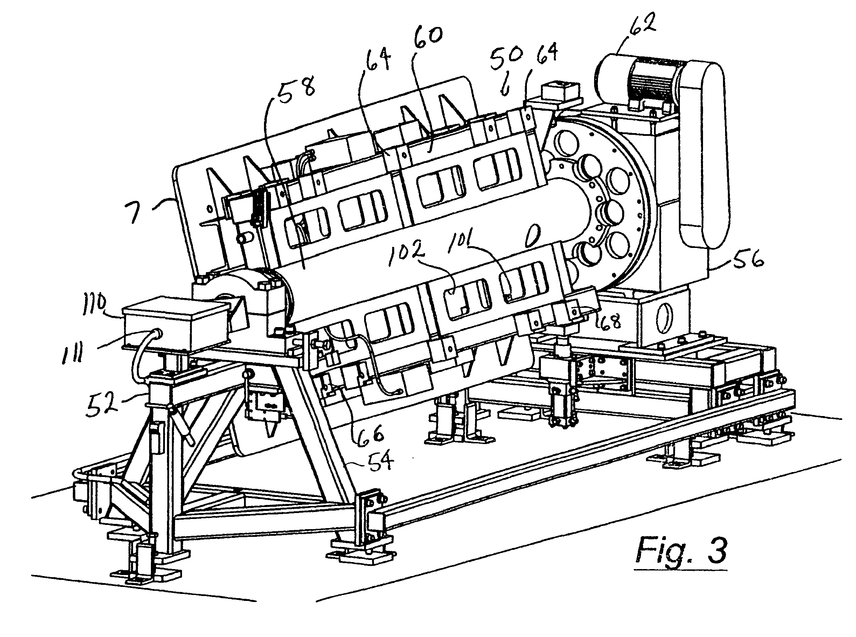

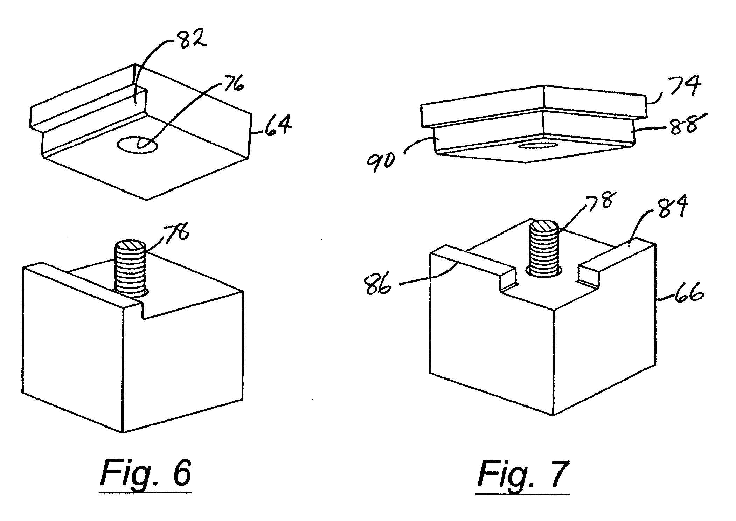

Referring to Figures 1-7, a preferred embodiment tooling plate 7 (sometimes called a tooling tray) is provided. The tooling plate 7 is utilized to fixture a workpiece (not shown) of an automobile vehicle body welded subassembly (not shown). The tooling plate 7 includes a planar body 10. The planar body as shown is typically provided by 1800 mm by 2400 mm, 25 mm thick plate.

In an automotive vehicle body welding process line according to the present invention, there is typically several tooling plates provided having planar bodies standardized into 4-6 standardized dimensions. Tooling plate 7, as best shown in Figure 1A, has a series of positionally predetermined holes 11 formed therein by drilling and tapping. The holes 11 receive threaded fasteners extending therethrough (not shown) that connect the base plates 14 of various fixture tools.

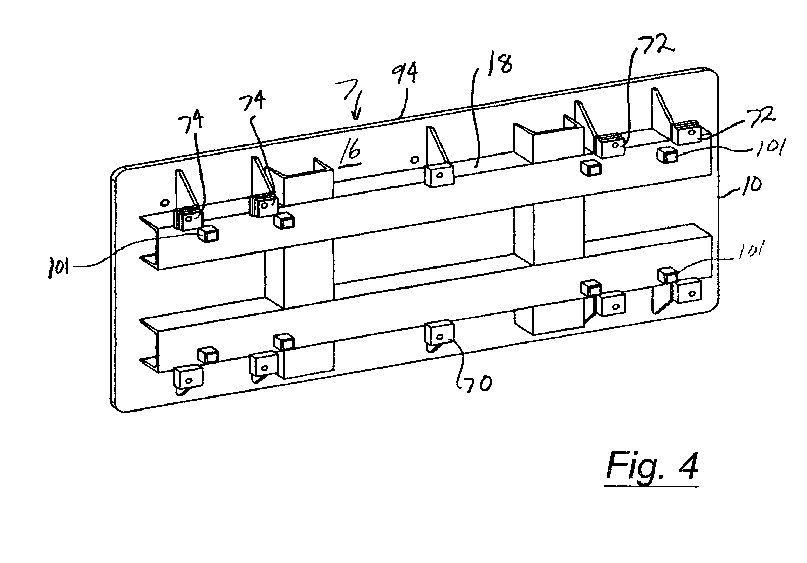

Referring specifically to Figure 4, a back surface 16 of the tooling plate has two longitudinal stiffening channels 18 attached by welding. The tooling plate 7 supports various fixture tools 32, 34 via their respective base plates 14, 36. The fixture tools are typically a combination of locating fixtures such as locating pin 38 along with a pneumatically actuated clamp 40. Various welded workpieces can be loaded to the fixture manually or, as in most cases, robotically by a robot (not shown). Appropriate control logic will be utilized to synchronize the loading robot with the various clamps 40 which are provided.

The tooling plate 7 will typically mount the appropriate pneumatic or electric actuators required along with any pneumatic control devices required. The fixture tooling can in some instances, be a geo positioning function wherein the tooling positions two separate workpieces which are welded together by a welding robot (not shown). In other configurations, the fixture tooling will hold just one workpiece for welding or other various metal working operations. These operations can additionally be spot welding, burr removing or weld finishing operations. In still other operations, fixture tooling will position a workpiece or a subassembly for sealant or adhesive application operations.

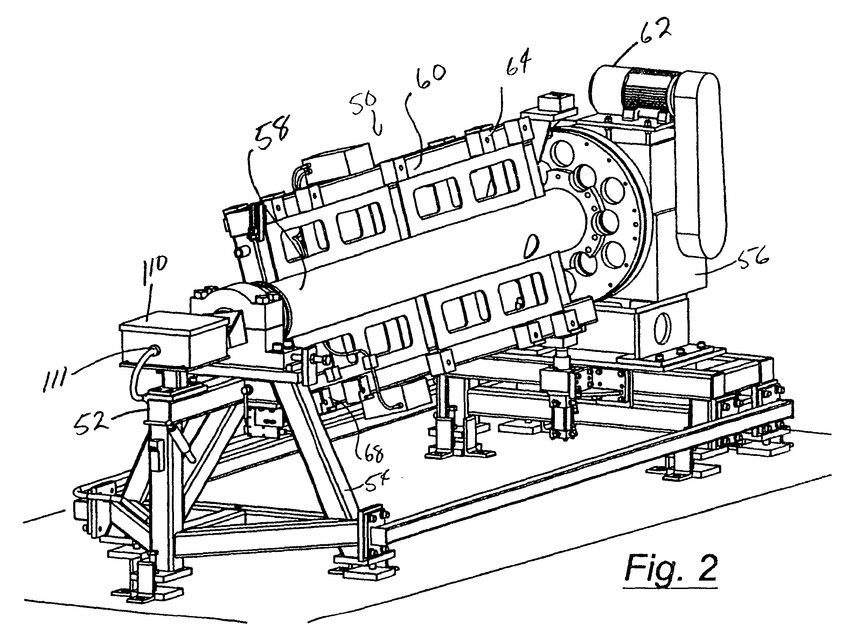

Referring specifically to Figure 2, a trunnion 50 is provided. The trunnion provides a platform for two tooling plates 7. The trunnion 50 includes a stand 52 which includes A-frame legs 54. An opposite end of trunnion 50 has a motor stand 56. Rotatably mounted to the stands 52, 56 is a drum 58. The drum 58 has rigidly connected thereto a supporting frame 60. The drum 58 can be rotated along a horizontal via a drive train driven by a motor 62. Positioned on frame 60 is a locater mechanism which includes three axis abutment locater heel blocks 64, 66, 68.

Referring back to Figure 4, tooling plate 7 has three axis abutment system heel blocks (sometimes referred to as plates) 70, 72, 74. All of the heel blocks have a hole 76 which allows for receipt of a shank of a fastener 78. The heel block 66 has a longitudinal locating axis block portion 80. The heel block 64 has a longitudinal groove formed by recess step 82. Step 82 is configured to be operatively associated with the block portion 80.

The heel block 68 has perpendicularly extending block portions 84, 86. Heel block 74 has recessed steps 88, 90. Recessed steps 88, 90 are provided to make abutting contact with respective block portions 84, 86.

The heel blocks provided on the frame 60 and on the tooling plate 7 provide a locater mechanism to allow the tooling plate 7 to be positioned in a precise, repeatable manner. The edge 94 of the tooling plate is aligned with a lower edge 100 of the frame. The steps 82 of the heel block 64 are aligned with the block portion 80. Additionally, the recessed steps 88 are aligned with the block portions 84. At this point, alignment is achieved in the horizontal axis. The tooling plate is then slid to the left causing the recessed steps 90 to be abutted against the block portion 86. Alignment is then achieved in the horizontal axis or the transverse axis of the tooling plate 7.

Threaded fasteners are utilized to connect the tooling plate 7 with the frame 60 which extends through the holes 76. The thicknesses of the heel plates, when the threaded fasteners are torqued or tightened, will set the position of the tooling plate 7 in the Z-axis (a direction generally perpendicular with the surface of the planar body 10 of the tooling plate). The tooling plate has eight standoffs 101. The standoffs 101 (Figure 4) extend outwardly further than the locater heel blocks. The standoffs 101 prevent the locater heel blocks from coming in contact with any flat surface, such as the factory floor, which the tooling plate 7 may be placed upon when the tooling plate is removed from the platform (frame 60). When the tooling plate is attached to the frame 60 the standoff 101 will project through an aperture 102 provided in the trunnion frame 60.

As shown in Figure 1, trunnion 50 can have two identical tooling plates 7. Often, one tooling plate will be utilized for loading a workpiece or workpieces to the tooling plate, while a robot is performing an operation on the workpiece or workpieces on the other tooling plate. In other applications, the two tooling plates can have fixture tools for workpieces which differ from one another. On one trunnion side, the fixture tools may fixture two workpieces for a passenger car. On the other trunnion side the workpieces may be for a truck.

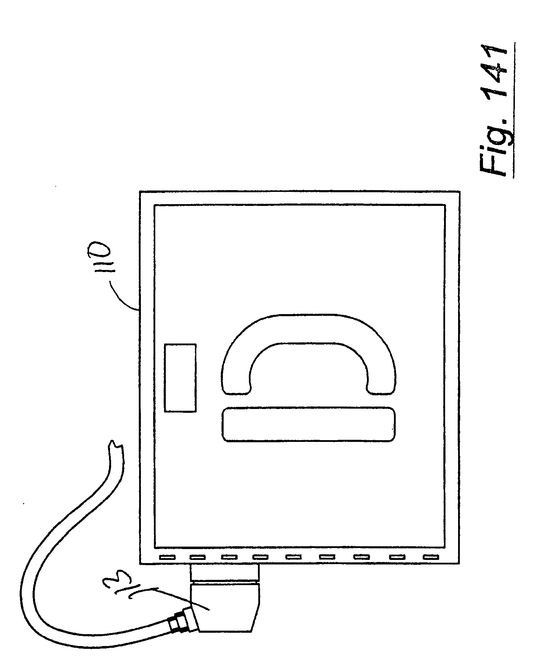

A quick disconnection 111 for a line supplying air for the pneumatic actuators is made via a connector box 110 provided on the trunnion 50. An enlargement of a multiple electrical quick connector 113 is shown in Figure 141.

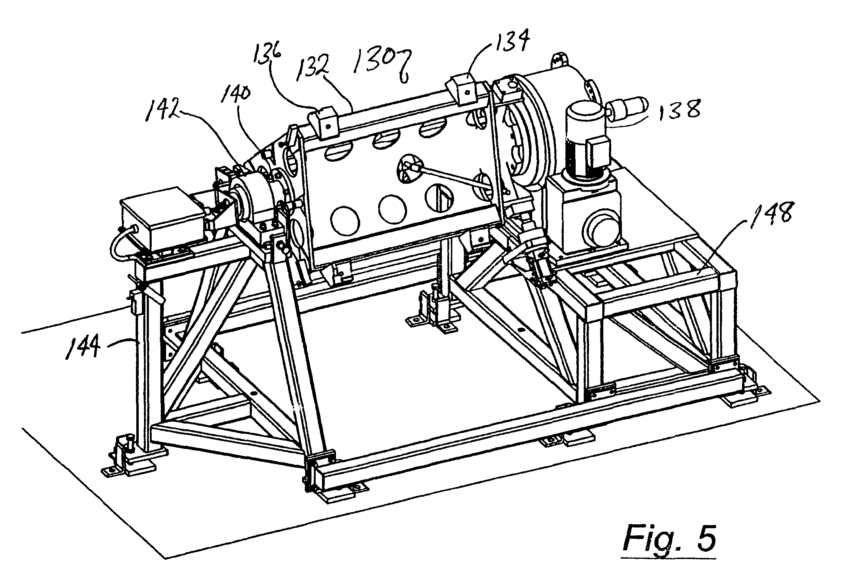

Referring in particular to Figure 5, a three tooling plate trunnion 130 is provided. The trunnion 130 is very similar to that previously described with reference to Figures 1-3, with the exception that it can hold three tooling plate (not shown). Typically, the tooling plates utilized in trunnion 130 will be smaller members than the tooling plates shown in Figure 4. However, the same locating and connective principles will apply. Such a trunnion will typically be utilized for smaller subassemblies or operations associated with manual machines.

The trunnion 130 has a frame 132 which is provided with heel blocks 134, 136. A motor is provided through appropriate gearing to turn a horizontally mounted shaft 140 which is journalled at one end by a bearing 142 supported on a stand 144. An opposite side stand 148 supports an opposite end of the shaft 140.

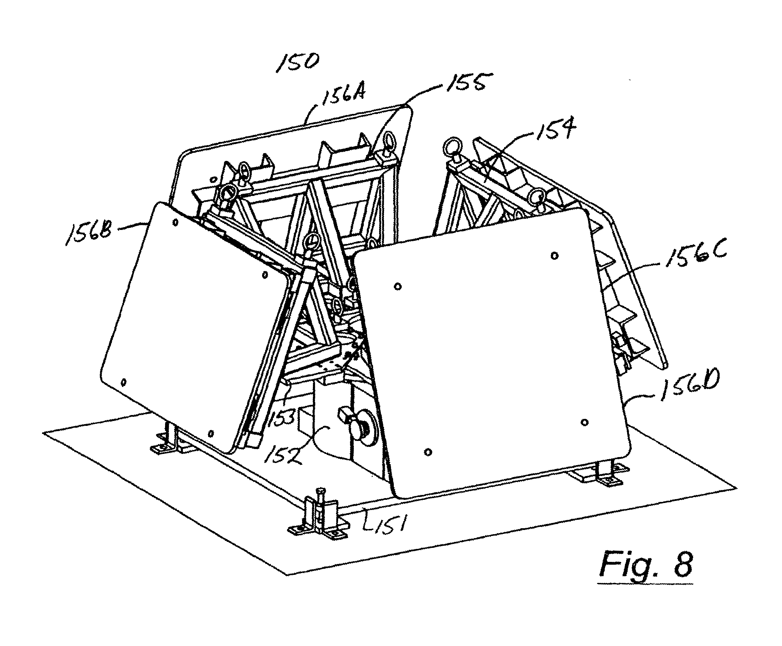

Referring to Figure 8, a turntable 150 is provided which has a base plate 151 upon which is supported a rotary base 152. A motor (not shown) turns a rotary table 153 about a vertical rotational axis. The rotary table 153 is rigidly connected to four geometrically spaced frames 154. The frames 154 have a series of heel blocks 155 similar to those previously explained, to provide a three axis abutment locater system. Precision located in a repeatable manner by the heel blocks 155 on each frame 154, are tooling plates 156A, 156B, 156C and 156D

Turntable 150 in some instances will have fixture tooling which may be exclusively dedicated to a given subassembly formed by two or more workpieces. In an alternative arrangement, the turntable will provide multiple tooling plates for a first subassembly which is materially different than that of a second subassembly. The difference can be that of between passenger cars and trucks and sports utility vehicles, front-wheel drive and rear-wheel drive vehicles, or vehicles having a body that is married to a chassis having its frame, or unibody type vehicles wherein a portion of the vehicle is formed to provide for its frame portion. In such situations, the turntable 150 will be programmed to present to an operational tool (such as a robot spot welder or a robot sealant or adhesive applicator) in a selective, non sequential manner, the intended workpiece.

A flexible manufacturing system according to the present invention preferably utilizes sixteen standardized flexible shop task stations.

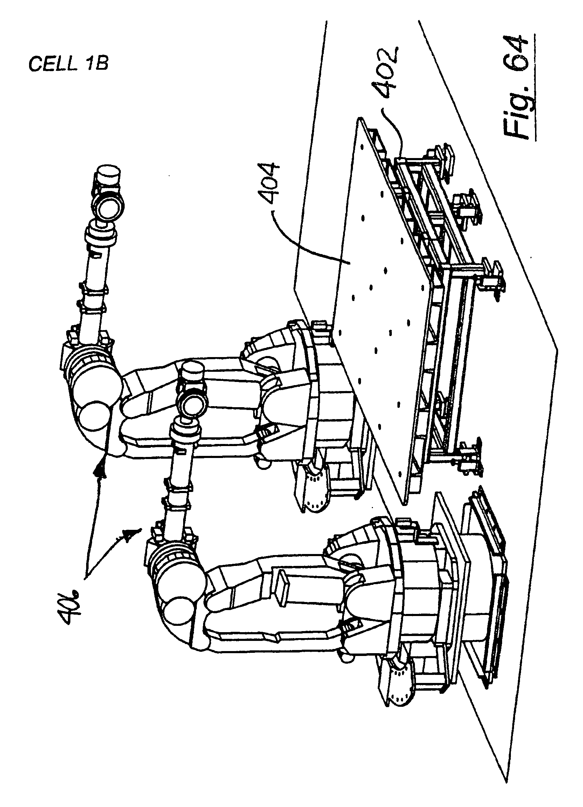

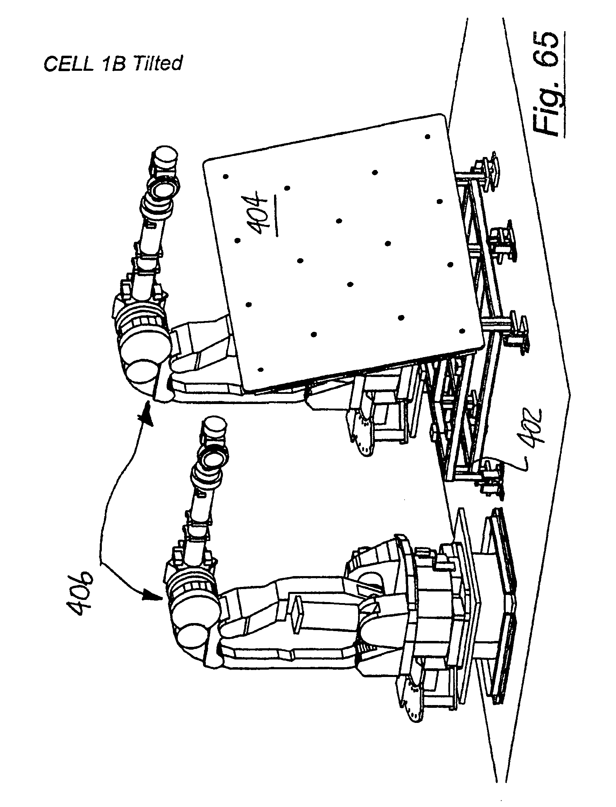

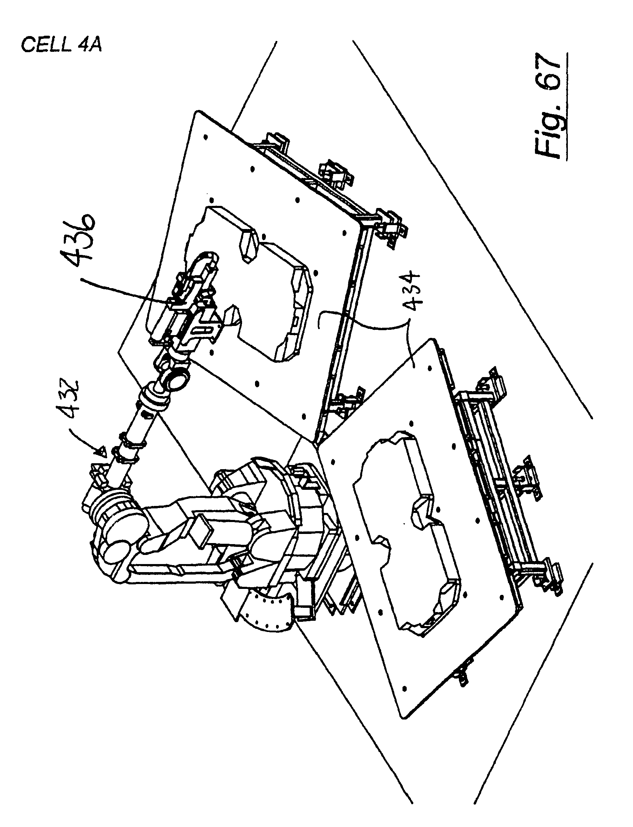

Task station 1 (TS1), shown in Figure 64, is a tabletop fixture, having tilt platform 402 for mounting tooling plate 404, and at least one robot 406. Tilt platform 402 accommodates tooling plate 404 by tilting from the horizontal to a convenient easel-like angle as shown in Figure 65. The tilting feature allows an operator, whether human or otherwise, to reach fixtures (not shown) mounted upon tooling plate 404 so as to mount a workpiece when tilt platform 402 and tooling place 404 are in the tilted position, with tooling plate 404 and platform 402 being returned to the horizontal position for welding or sealer application, or other operations performed by one or more robots 406. If welding is desired, robots 406 may be equipped with a weld gun 436, as shown in Figure 67. The fixture shown in Figures 64 and 65 may preferably accommodate tooling plates ranging in size from about 900 x 1200 mm to about 1800 x 2400 mm.

The welder robot 406 employed in task station 1 (Figures 64 and 65) may be a completely robotic welder or otherwise. Other units which may be used with task station 1 include robotic material handling devices utilizing a custom design gripper to remove a part assembly from a fixture mounted upon tooling plate 404, or a combined robotic material handler and welder combination. As another option, the work envelopes of robots 406 may be increased by using a 7th-axis slide.

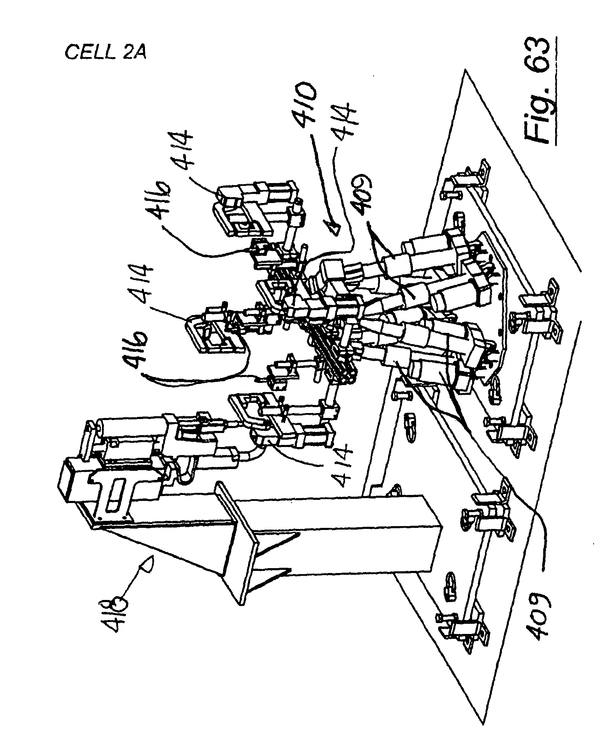

Task station 2 (TS2), shown in Figure 63, is a hexapod manipulator task station. As used herein, the term "hexapod manipulator" means a compact robot having six electrically driven, computer operated ball screws409 which hold and position a workpiece. Here, hexapod manipulator 410 uses clamps 414 and pins 416 to precisely hold a workpiece for welding by means of pedestal welding machine 418. Unlike welders attached as an end effector to a movable robot, pedestal welder 418 does not move, rather the workpiece must be brought to welder 418. Pedestal welder 418 may be supplemented or even supplanted by a projection weld gun unit (not shown) which includes a transformer, cables and weld controller, with hexapod 410 manipulating the workpiece into the weld gun of pedestal welder.

As yet other alternatives for task station 2, a sealer dispensing unit (not shown) may be used to place sealer on certain surfaces of a workpiece while the workpiece is positioned by hexapod manipulator 410. Finally, a nut feeder with a hopper and a feeder tube (not shown) may be used to supply nuts which can be welded or mechanically fastened in place upon the work piece.

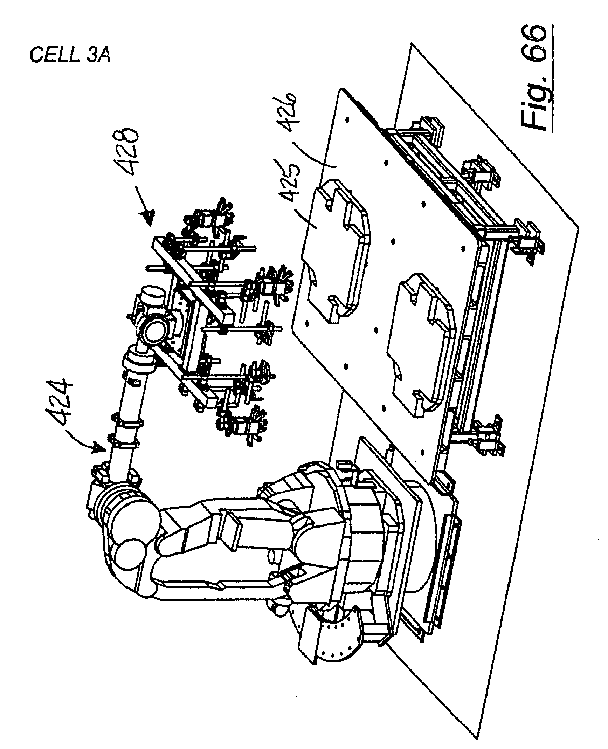

Task station 3 (TS3), shown in Figure 66, is a pedestal welding task station having robot 424 for positioning a workpiece. When task station 3 is employed, an operator, human or otherwise, will position the workpiece parts within fixtures 425 attached to tooling plate 426, which is mounted at bench height. Then, end effector 428, which is a gripper, and robot 424 will pick up the parts from tooling plate 426 and move them either to a pedestal welder of the type shown in Figure 63 for task station 2, or a projection welder or a sealer dispenser (not shown).

Task station 4 (TS4), shown in Figure 67, is a dual station having a seventh-axis slide to increase the work envelope of robot 432. As shown, task station 4 may have dual tooling plates 434 and may utilize either a shared robot 432, or multiple robots. A variety of tooling plates may be used, with several different sizes extending from approximately 900 x 1200 mm to the largest at about 1800 x 2400 mm. Welding gun 436 handles the task of supplying the localized current and electrodes needed for a spot or fusion welding operation.

As described above, robotic welding units or material handler robots or material and welder combination robots may be employed with this task station. Also, the tooling plate orientation may be zero° or flat, 30° angled or 70° angled. An important point here is that interchangeable tooling plates or plates allow repeatable and precise positioning of parts.

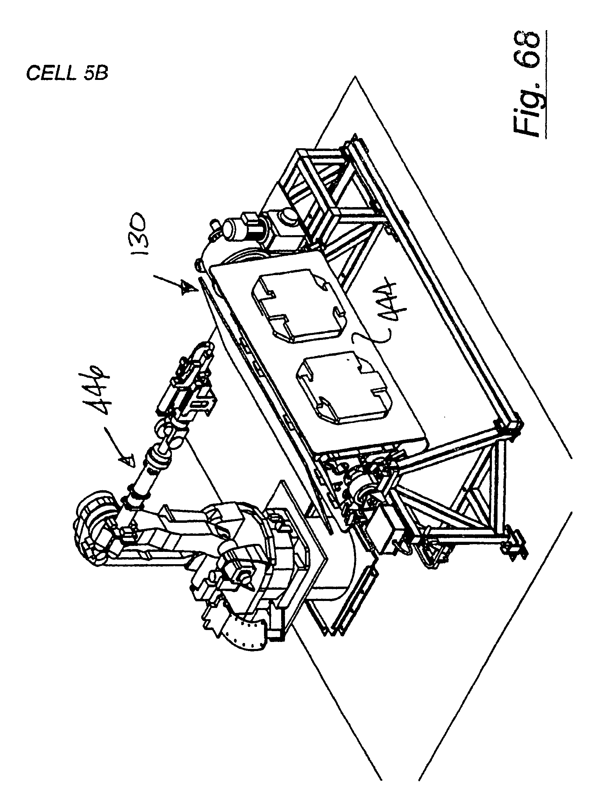

Task station 5 (TS5), shown in Figures 5 and 68, includes a three-sided trunnion fixture 442, which may be equipped with three tooling plates 444 (Figure 68) and which rotates about a horizontal axis so as to present workpieces to welding robot 446. Figure 5 illustrates trunnion fixture 442 with the tooling plates removed, and without robot 446.

Figures 1-3 illustrate the aforementioned two-sided trunnion 50, which is a second larger version of task station 5 and which also rotates about a horizontal axis and which accepts a standard tooling plate 7, albeit of a larger size than the tooling plates employed with the three-sided trunnion fixture 130. Two-sided trunnion 50 also functions as a workpiece presenter, preferably for a welding or sealing operation.

As shown in Figure 1, tooling plate 7 has a plurality of tooling fixtures 34 mounted thereon. Tooling fixtures 34 include a plurality of locating pins 38. This tooling plate setup has quick disconnect 111 for pneumatic service (not shown).

Task station 6 (TS6), shown in Figure 8 is a four-sided turntable fixture 460 having four positions and which mounts four standard tooling plates 450. Turntable 460 would be expected to be constructed in approximately three different capacity ranges from 3000 to 9300 kg (6500 to 20,500 lbs total capacity). This largest turntable could accommodate tooling plates up to 1800 x 2400 mm.

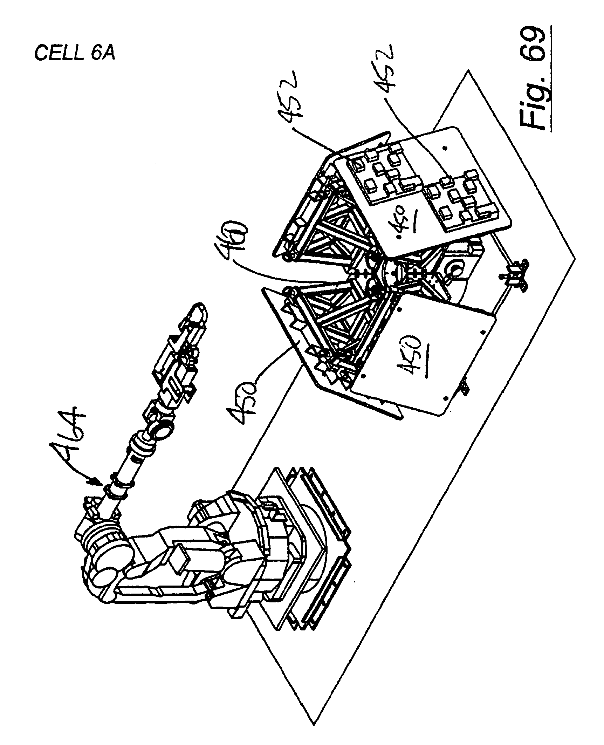

As shown in Figure 69, robotic welding could be accomplished by at least one welding robot 464. Although multiple tooling fixture modules 452 are shown as being attached to tooling plates 450, those skilled in the art will appreciate in view of this disclosure that other types of tooling arrangements could be selected. Robotic material handling is another option as is a combination material handler and welder (not shown). Finally, a seventh-axis slide (not shown) may be used to increase the welding robot's work envelope.

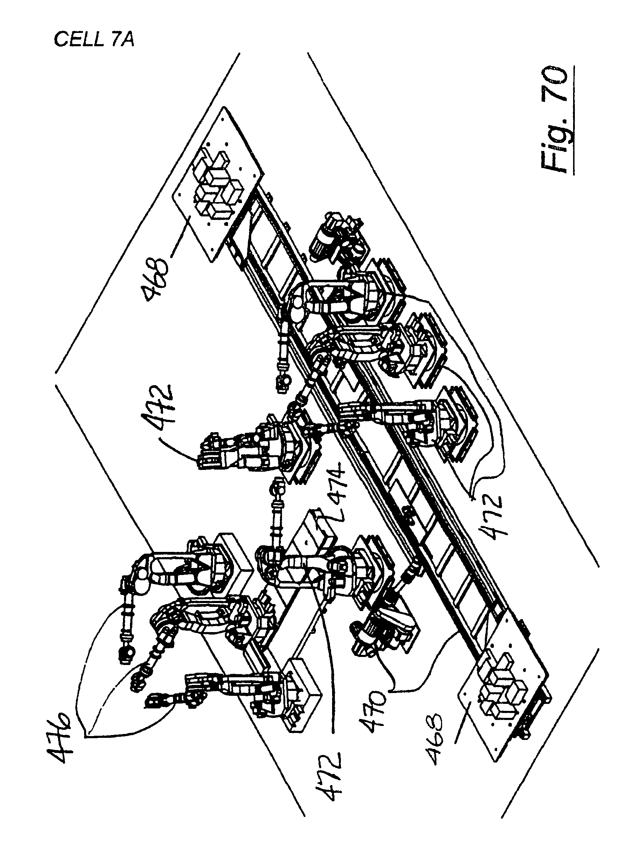

Task station 7 (TS7), shown in Figure 70, is an indexing tooling plate task station having two tooling plates 468 which are independently controlled and which are preferably loaded by a human operator. Tooling plates 468 are mounted to indexing shuttle mechanism 470 which indexes the loaded tooling plates and attached workpieces into a welding or sealing zone. Up to five welding or sealing or machining robots 472 or other types of robot may be used with task station 7. Because shuttle 470 travels perpendicular to the material system flow, operators may load parts from three sides of the fixture and one additional slide mechanism 474 and material handling robots 476 may be accommodated on the opposing side. Task station 7 may be used with robotic welders or robotic material handlers or combination robotic material handler and welder robots, as previously described.

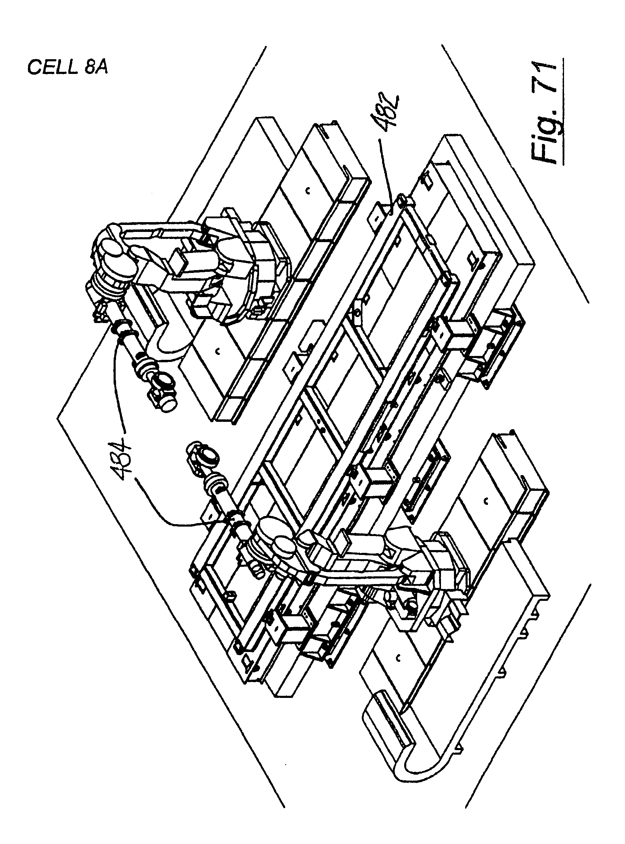

Task station 8 (TS8), shown in Figure 71, is a laser welding task station equipped for receiving a very large tooling plate (not shown) by means of roller bed 482. This large tooling plate is often termed a "pallet" in the trade. Although two laser welding robots 484 are shown, additional robots, or even a single robot, could be used with this task station. Additional equipment which could be employed with task station 8 according to the needs of someone wishing to practice the present invention could include a robot vision system to track a laser robot, or a seventh axis slide to increase the robot's work envelope.

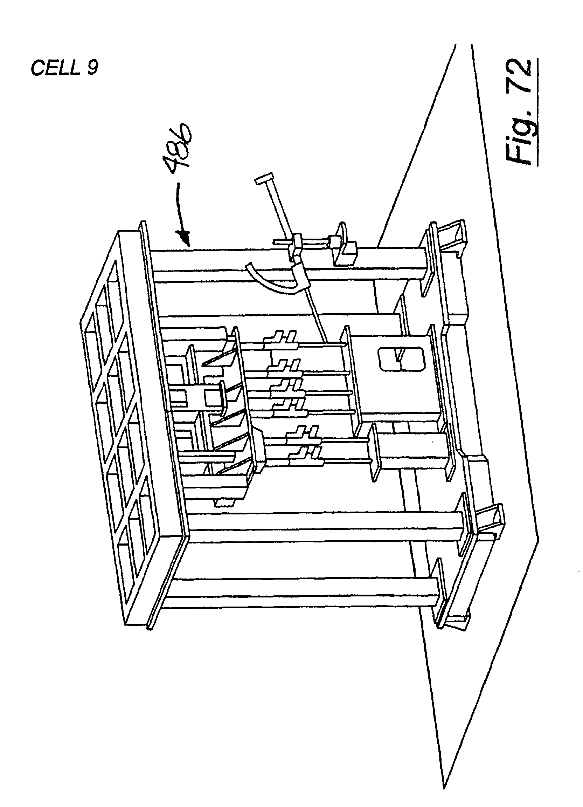

Task station 9 (TS9), shown in Figure 72, includes press welding fixture 486 which allows many spot welds to be made in a short period of time. This type of fixture has been in use for many years in automotive assembly plant body shops, but without the addition of the inventive tooling plate system, and without being part of a standardized task station system according to the present invention.

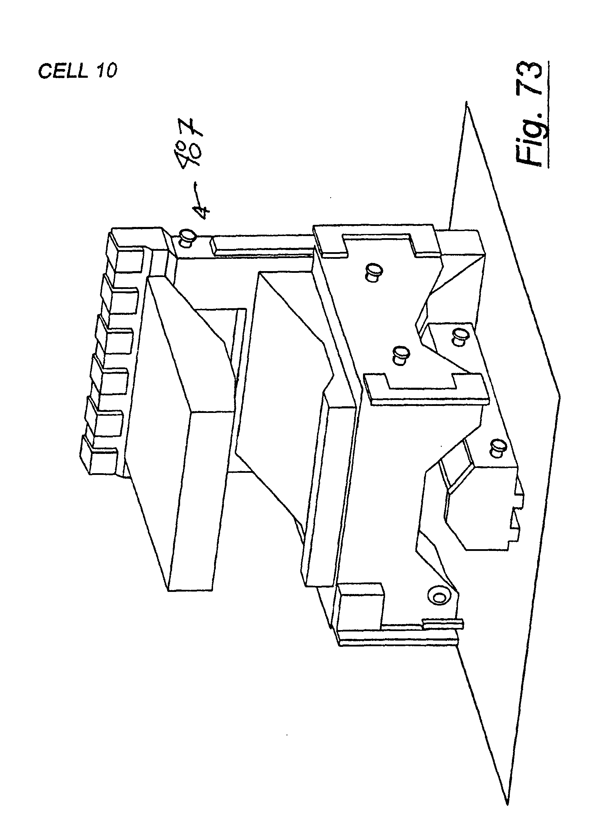

Task station 10 (TS10), shown in Figure 73, is a schematic representation of a task station which may include either a conventional hemmer or a clincher or a piercer. A robotic material handler may be used with this task station to remove processed assemblies or subassemblies.

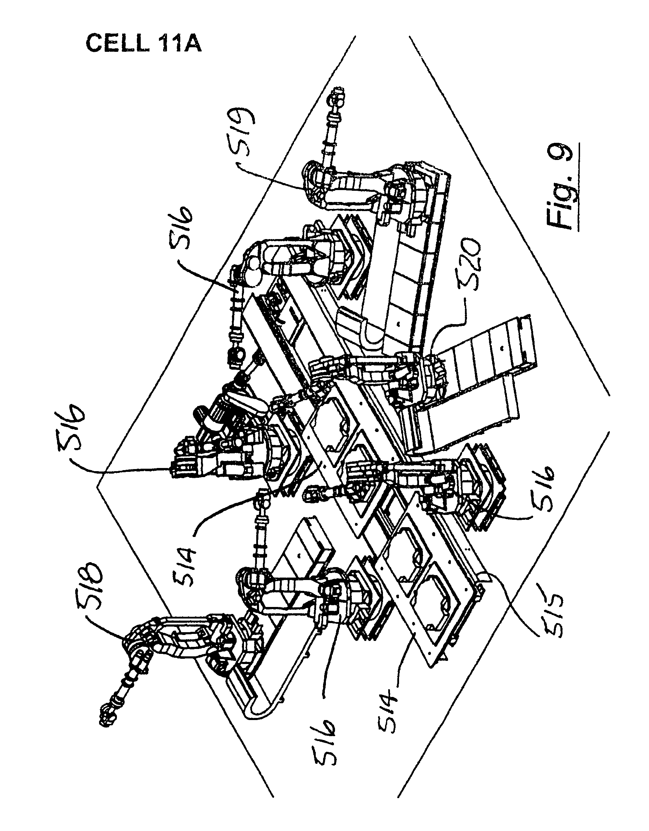

Task station 11 (TS11), shown in Figure 9, has two sliding tool plates 514 and multiple robots. Tooling plates 514 are mounted on common indexing shuttle 515. The robots include four robots 516 for welding and three slide-mounted robots 518, 519, and 520 for handling material. Robots 519 and 520 allow workpieces to be placed on either one of tool plates 514 depending on the mix of parts needed from task station 11. It should be noted that the slides for robots 519 and 520 are neither parallel to each other nor perpendicular to the center axis of indexing shuttle 515. Optionally, robots 516 may be either welding robots or could be other types of robots such as sealing or adhesive dispensing units.

Task station 11 provides a very high level of flexibility because the diverging arrangement of the slide mounts for material handling robots 519 and 520 allow for large, extensive feeder stations (not shown) which may accommodate a very wide range of component parts and subassemblies. This flexibility is extremely useful in conjunction with the capability to process multiple parts with tooling plates 514.

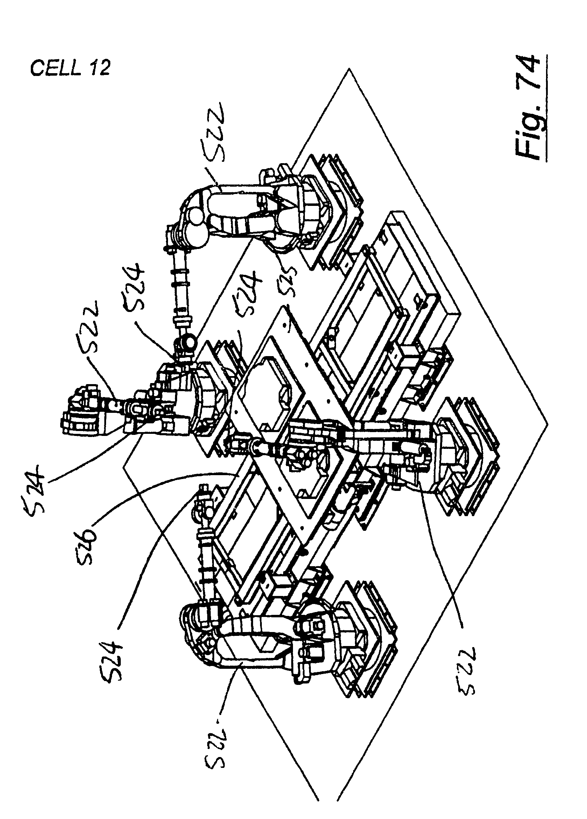

Task station 12 (TS12), shown in Figure 74, which has provisions for receiving pallet 525 on roller bed 526, is a vision task station containing optical measuring devices and fixtures for performing inspections using four robots 522 and cameras 524 with associated calibration equipment. Optionally, a smaller or larger number of cameras and robots could be employed with this task station.

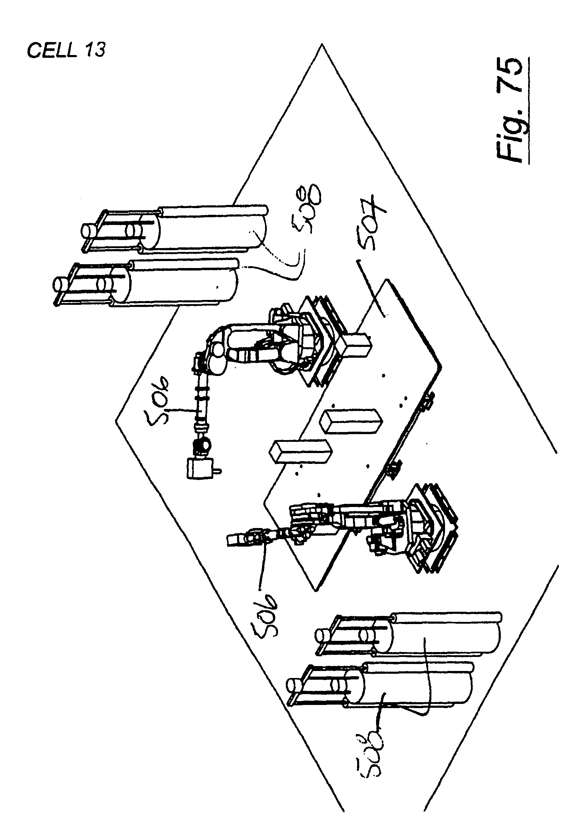

Task station 13 (TS13), shown in Figure 75, is a sealer applying task station having two robots 506 which apply either adhesive, or sealer or mastic stored in tanks 508. Although a larger tooling plate 507 is illustrated in Figure 75, as with other task stations, either a smaller tooling plate or a large pallet could be employed for handling workpieces. If a pallet is used, task station 13 could have a roller bed for accommodating the pallet system.

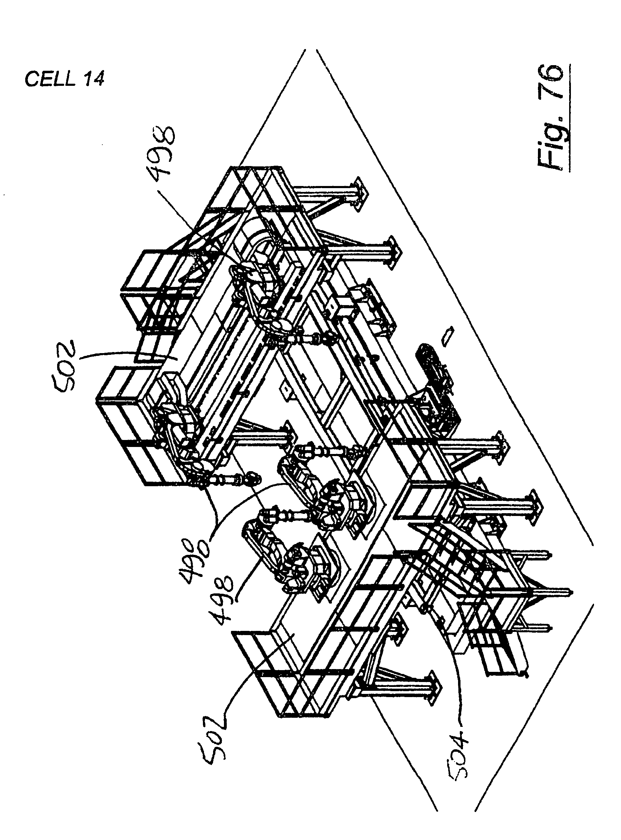

Task station 14 (TS14), shown in Figure 76, is a welding task station including dual shuttling tooling plates (not shown) mounted upon shuttle drive 504, and four robots 498 mounted on balconies 502 which allow robots 498 to reach down to operate on workpieces carried upon the tooling plates as they move back and forth under robots 498. The sliding tooling plates provide model mix capability. In other words, different types of vehicles may be handled without the need for tooling change over.

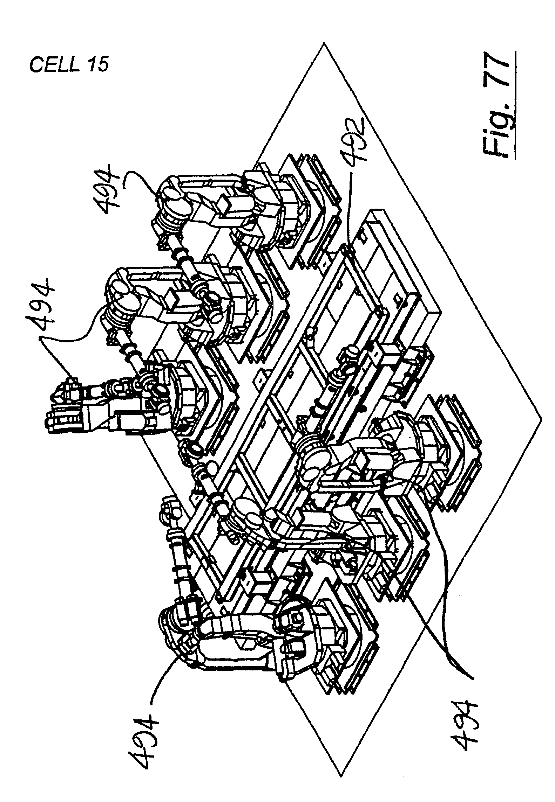

Task station 15 (TS15), shown in Figure 77, is a welding task station used for large assemblies and includes roller bed 492 for accommodating a pallet (not shown) and may utilize not only the six illustrated robots 494, but also robotic welders or sealing or adhesive application robots. Alternatively, a smaller number of welding robots could be employed, either alone or with adhesive or sealer applying robots.

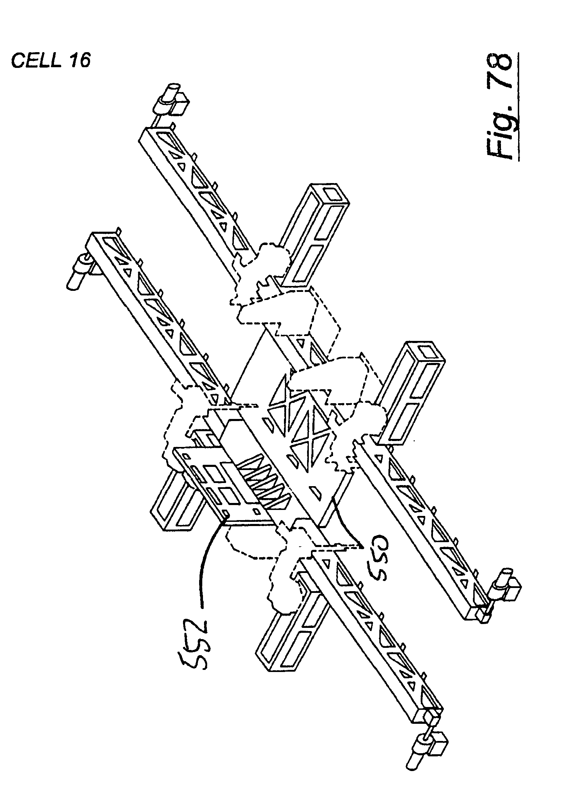

Task station 16 (TS16), shown in Figure 78, is schematic representation framer which is used to join a vehicle body side to an underbody. In use, the underbody would be mounted upon a pallet and brought into a roller bed 550 that is incorporated in task station 16. A gate fixture 552 is used to mate the body side with the underbody while the underbody is on the pallet, to permit welding of the body side and underbody. If desired, task station 16 equipment may be augmented by an overhead balcony holding additional robots or an indexing unit and extra gate so as to accommodate other body configurations.

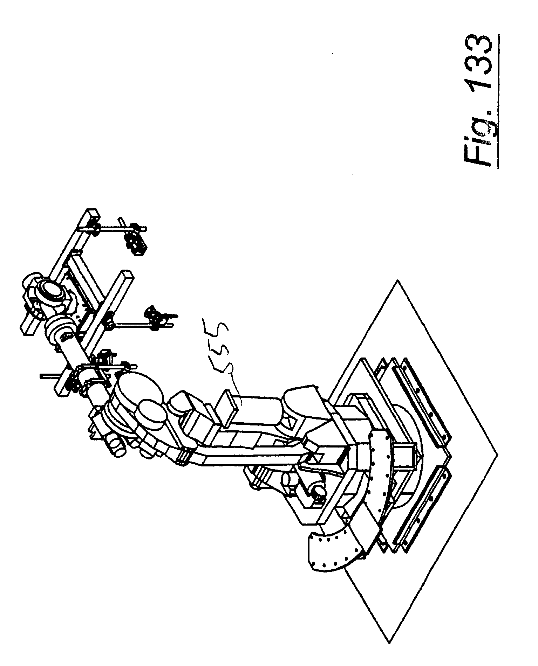

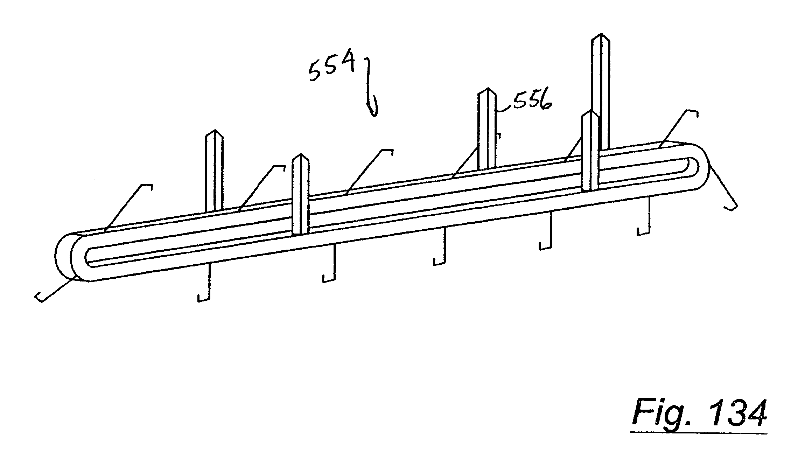

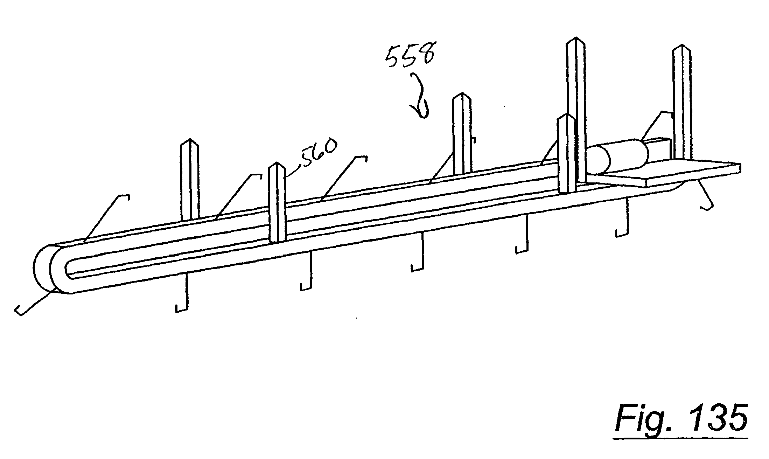

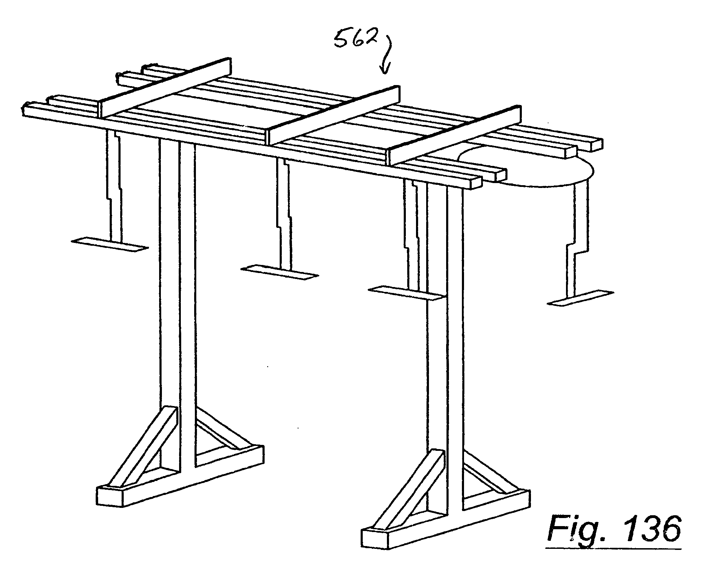

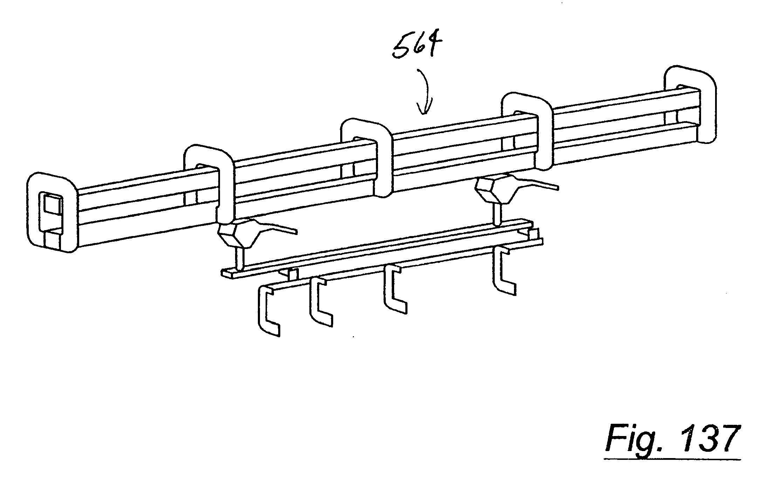

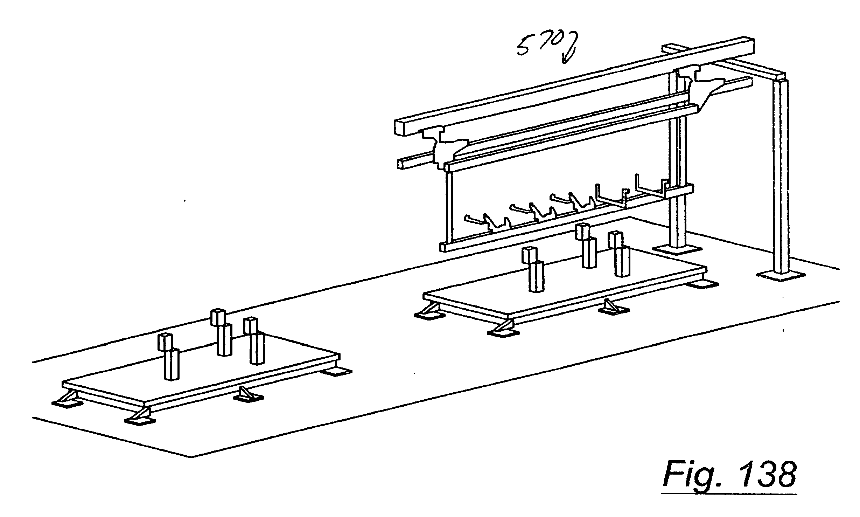

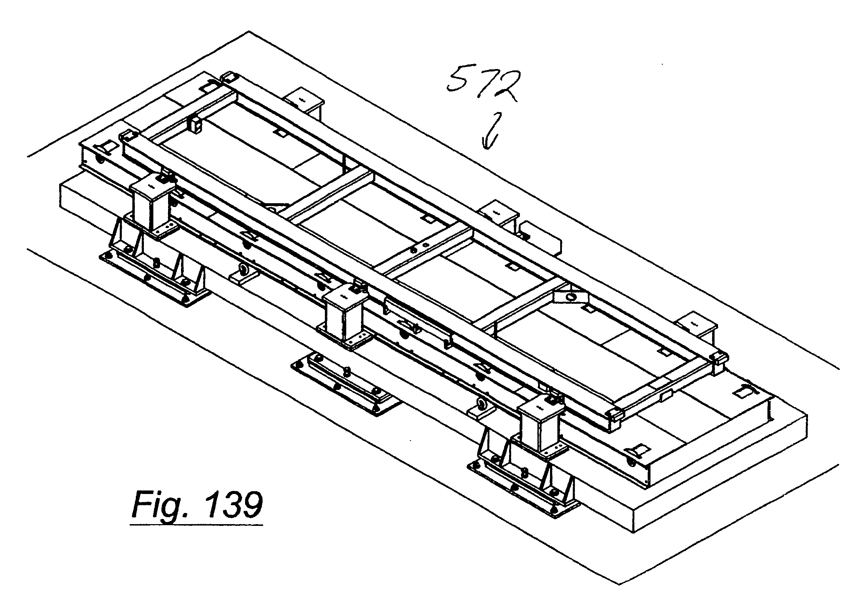

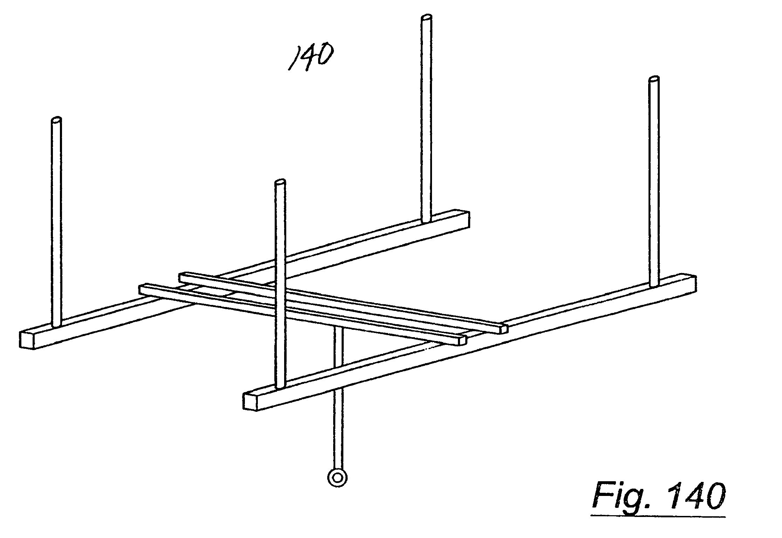

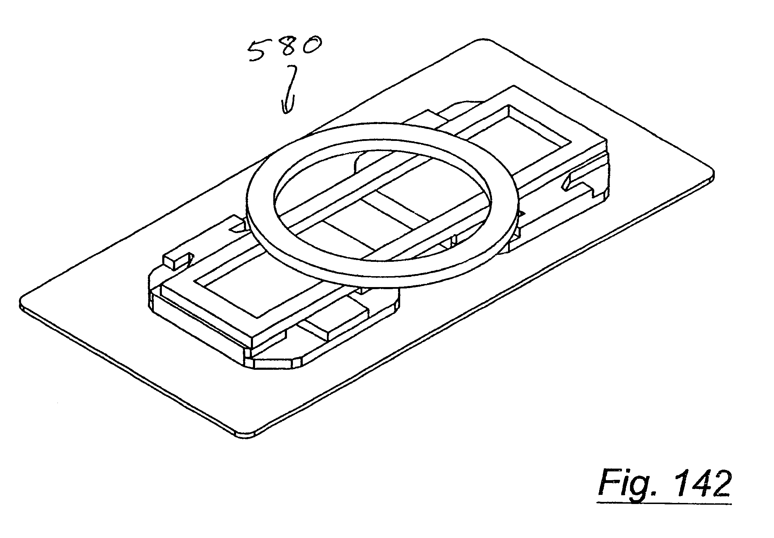

The flexible manufacturing system also has standardized transfer task stations to move workpieces and subassemblies between various templates and operational task stations. A first transfer task station is provided by a robot 555 (Figure 133) transferring between any of the aforementioned task stations 1-16. Referring to Figure 134, a second transfer task station comprises a gravity powered over and under conveyor 554, which is typically supported by overhead hangers 556. Referring to Figure 135, a third transfer task station is provided by an electrically powered over and under conveyor 558, which is suspended from overhead hangers 560. A fourth transfer task station is provided by an enclosed track monorail 562 (Figure 136). A fifth transfer task station is provided by an exposed monorail 564 (Figure 137 partially shown). A sixth transfer task station is provided by an electrified monorail 570 (Figure 138). A seventh transfer task station is provided by a pallet transfer system 572 (Figure 139) which has a roller/chain delivery for heavier subassemblies. An eighth transfer task station is provided by an overhead bridge crane 574 (Figure 140). A pallet 580 with a turntable is shown in Figure 142.

As mentioned previously, the process line is formed by a plurality of templates which are combined in a predetermined alignment to form the process line. The process line can be made flexible in different ways. First, the process line can be made flexible so that a first set of different subassemblies can be manufactured on the process line which differ from one another. These different subassemblies can be manufactured simultaneously due to the presence on the process line of workpiece presenters which have a tooling plate for each separate subassembly. In rare instances where the process line is dedicated to one type of vehicle, the entire process line can be quickly retooled by changing the appropriate tooling plates and reprogramming the robotic operators. However, in most instances, flexibility is chiefly accomplished by having workpiece presenters with tooling plates for all types of subassemblies desired.

Examples of vehicle differences are two similar vehicles having different structures and various differences in body components, while having similar basic dimensions. Other examples are a process line for a different series of passenger vehicles.

In some instances it may be desirable for the process line to provide a body portion for two separate assembly lines which vastly differ from one another, such as a passenger car line assembly line and a light truck vehicle assembly line. In other instances, the different assembly plants may include a front-wheel drive vehicle assembly plant and a rear-wheel drive vehicle. In still other instances, the assembly plants may be for a unibody-type passenger vehicle and a body-on-frame-type passenger vehicle.

To minimize resources required, a determination is made of which task stations are required to form a given subassembly.

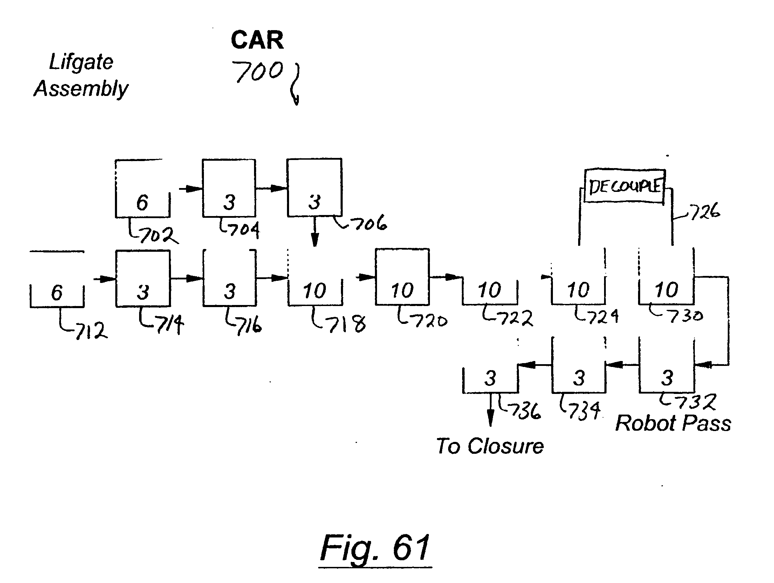

Figure 61 provides an arrangement of template 700 for producing a lift gate assembly of the vehicle. The lift gate is a rear end enclosure of a hatchback. An outer panel is geo-positioned (rigidly clamped and located) with reinforcements into a welding task station 6 noted as item 702. From the task station 702, via a number one transfer task station (robotic delivery not shown), the outer panel with its welded reinforcement is sent to a supplemental spot welding task station 3, item 704. From task station 3, 704 by robotic transfer the outer panel is delivered to a task station 3, 706 wherein sealant is applied. Simultaneously, the inner panel along with reinforcements is delivered to a geo-positioning task station 6, 712 where welds are performed which fix the position of the inner panel and its reinforcements. The inner panel is then delivered to two supplemental weld task stations 3, 714 and 716.

In a geo-positioning weld task station 10, 718 the inner panel is mated with the outer panel. Subsequent to the weld task station 10 the mated panels are delivered to two supplemental weld task stations 10, 720 and 722. By robotic transfer, the lift gate assembly is then delivered to a hemming task station 10, 724 wherein the outer panel is hemmed over the inner panel. The lift gate assembly is then delivered to a storage line 726 with queue 6 lift gate assemblies. The storage line acts as a buffer. The storage line is sometimes called a decouple.

The lift gate assembly is then robotically transferred from a storage station 726 to a task station 10, 730 which applies sealant. The lift gate assembly is then robotically transferred to a task station 3, 732 where additional sealant is applied.

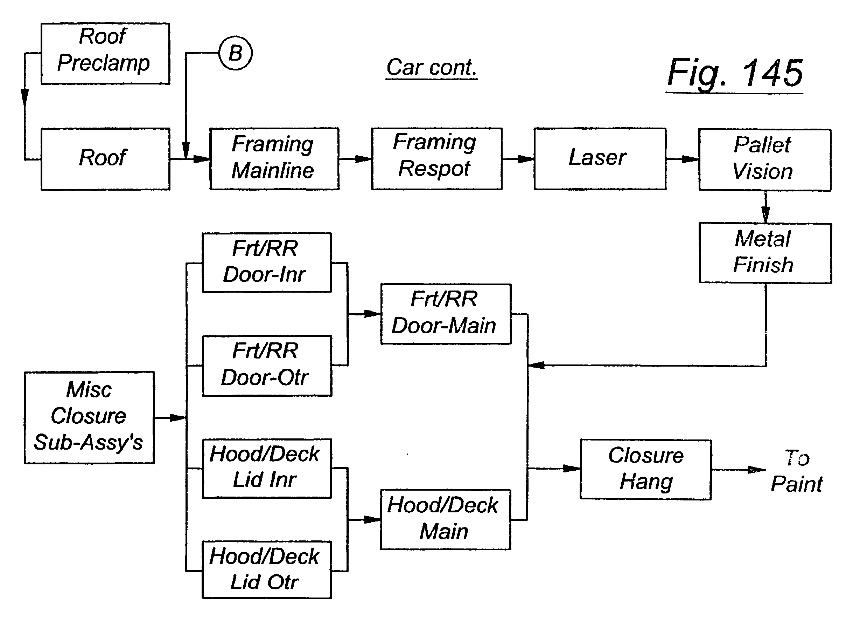

The lift gate assembly is then transferred to a task station 3, 734 where portions of the sealant are induction cured. The lift gate assembly is then transferred to another task station 3, 736 where there is a secondary induction cure. The lift gate assembly is then prepared to send to the closure of the main delivery line, shown in Figure 145.

As mentioned previously, the lift gate assembly template 700 has two re-spotting task stations 10 noted as items 720 and 722. The maximum feed rate of the lift gate assembly is approximately 40 lift gate assemblies per hour. If desired, re-spot task station 722 can be eliminated and the number of welds completed at the geo-positioning weld task station 10, 718 can be increased along with an increased number of welds at re-spot task station 10, 720. A thirty lift gate assembly feed rate will be established.

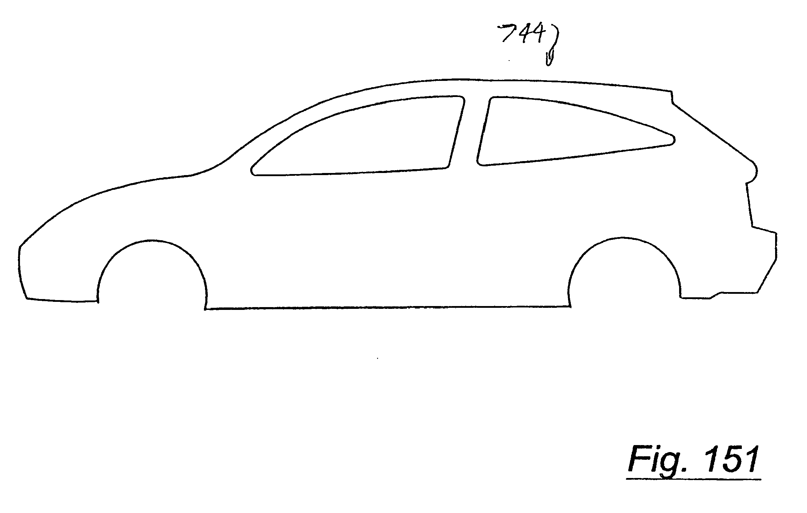

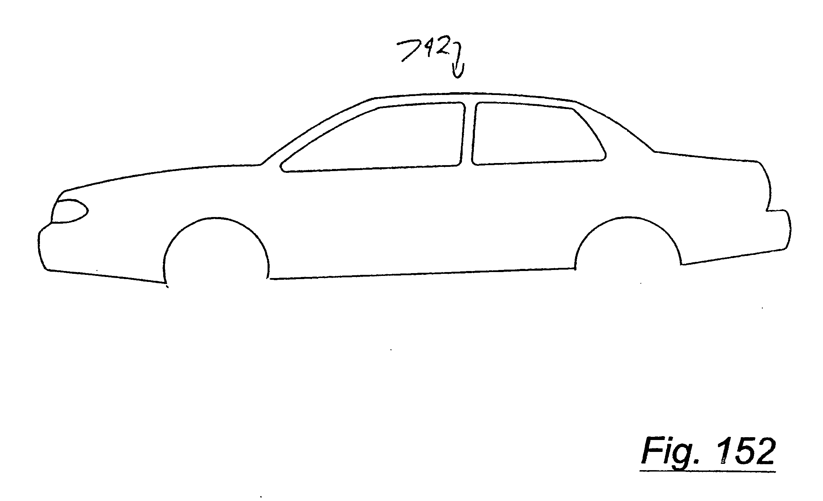

If a thirty lift gate assembly per hour completion rate is acceptable, then additional flexibility options may be realized. Task station 10, 720 may be dedicated to a first subassembly which is utilized for body-on-frame type vehicles (like rear wheel drive passenger car 742, Figure 152) and task station 10, 722 may be a dedicated task stations for unibody frame-type passenger car vehicles (like front wheel drive vehicle 744, Figure 151).

The lift gate assemblies in their initial phases of engineering will be stamped with holes so that the tooling prior to and including the weld geo-positioning task station 10, 718 can be common to both types of passenger vehicle bodies. Thereafter, the differences in the lift gate assemblies will be accommodated in the task stations 724 730, 732, 734 and 736.

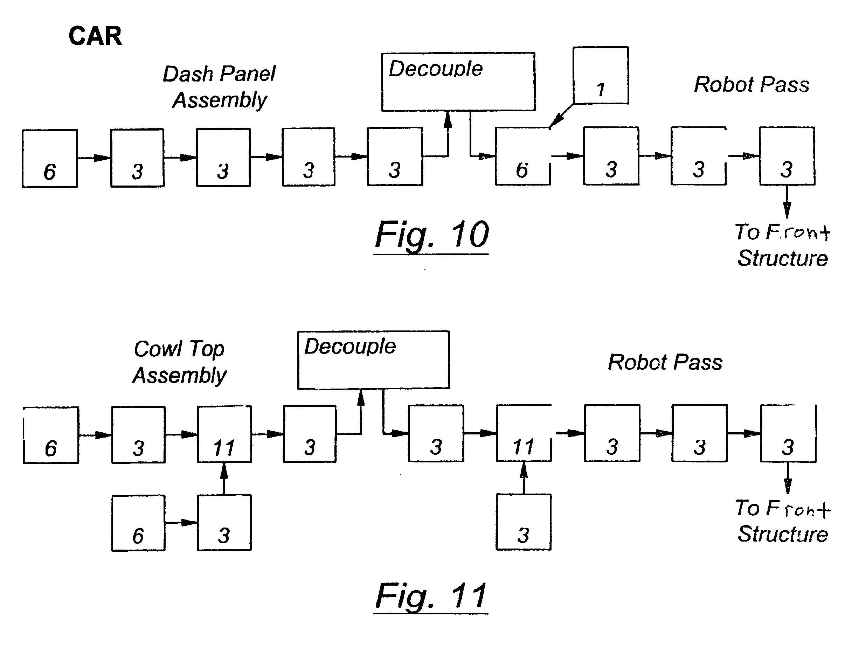

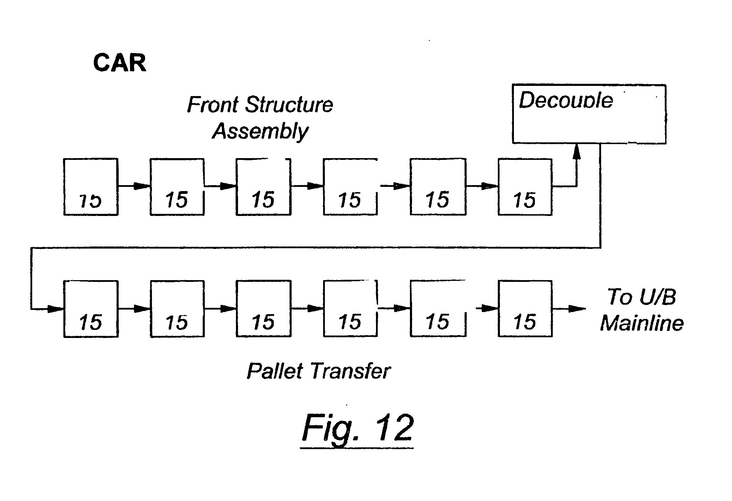

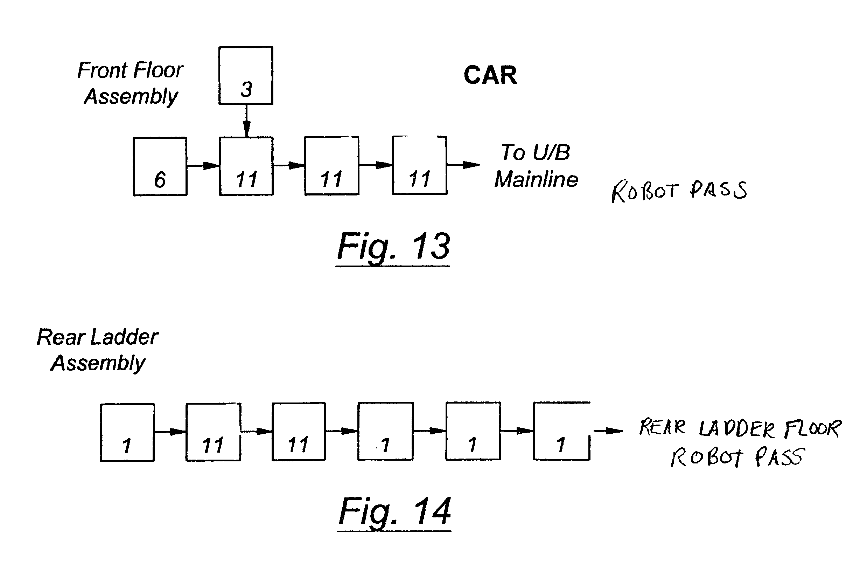

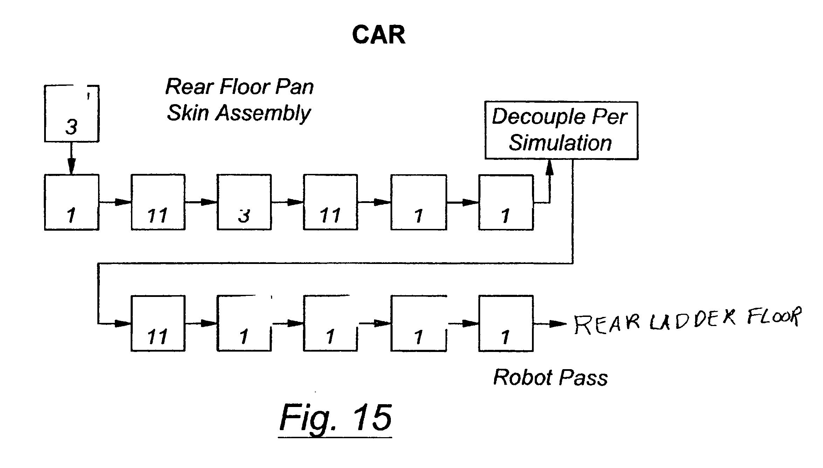

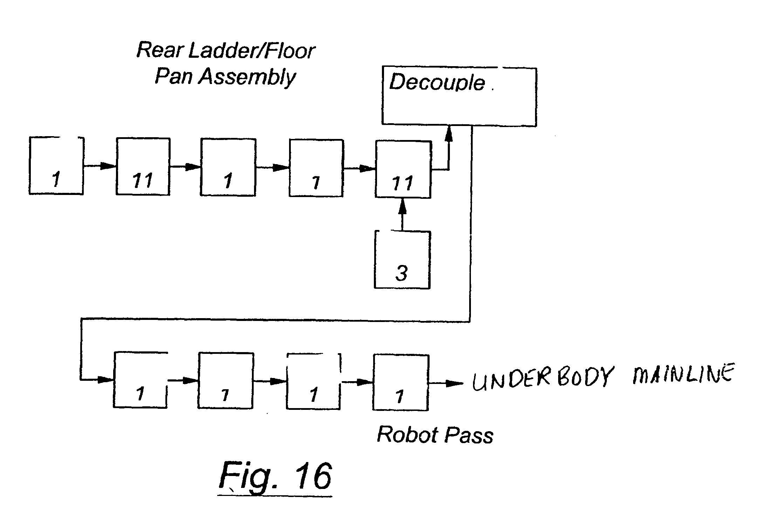

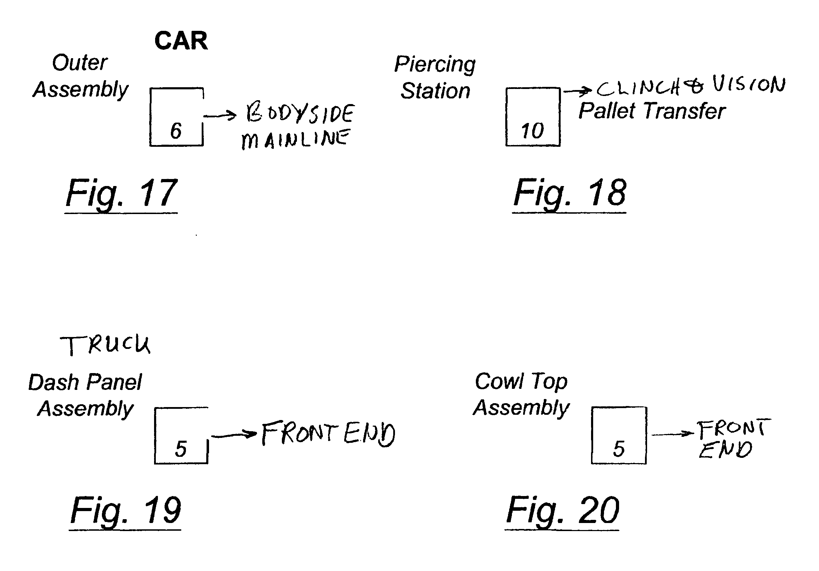

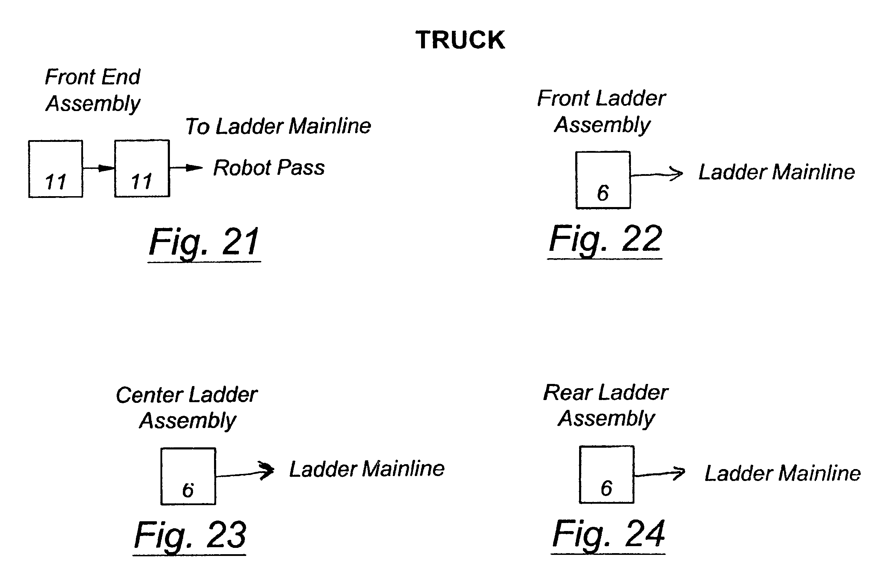

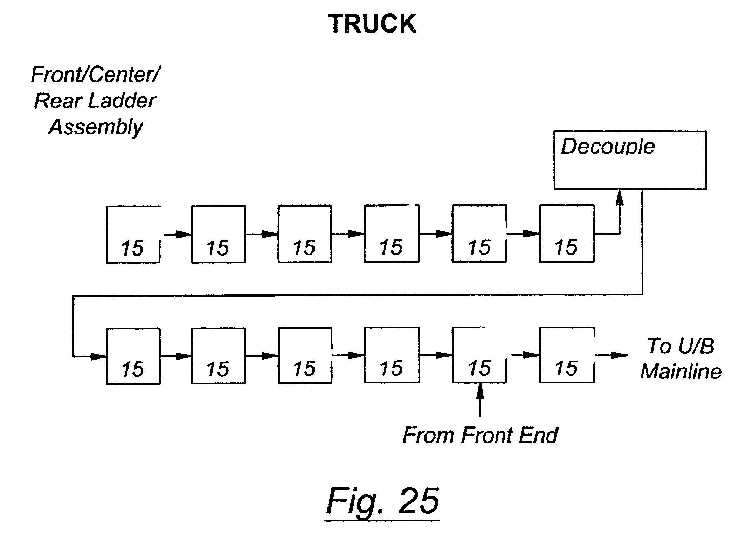

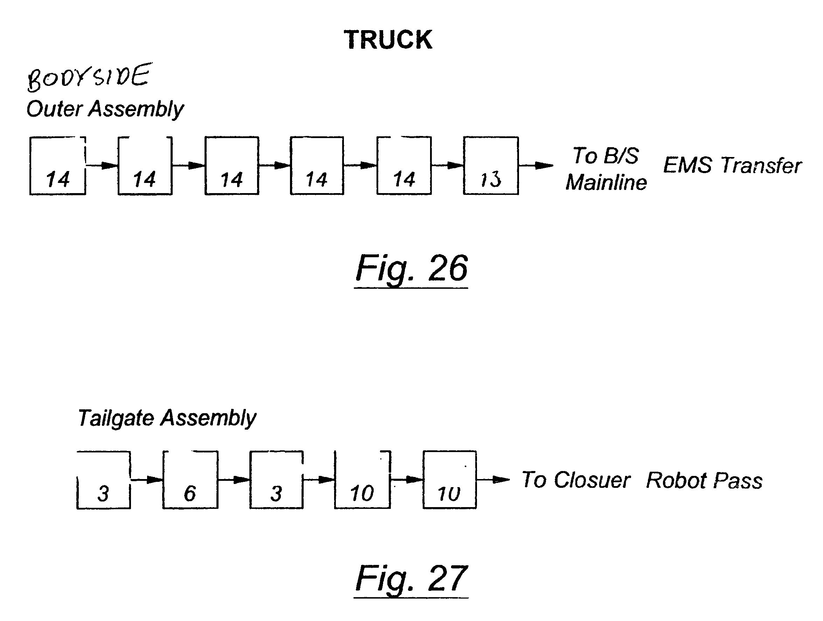

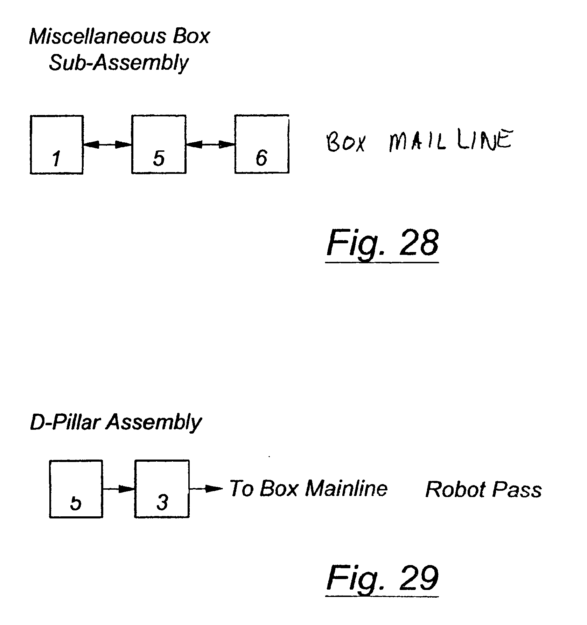

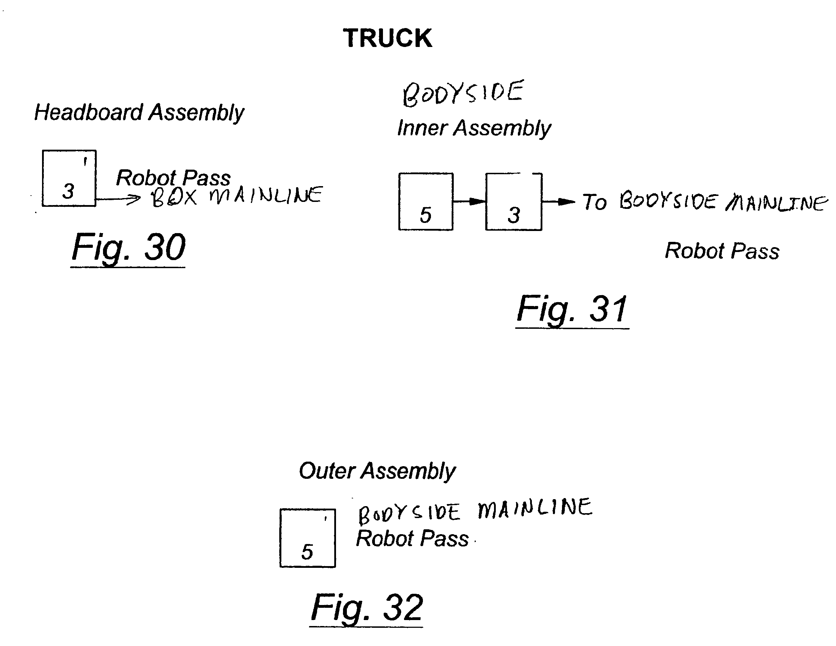

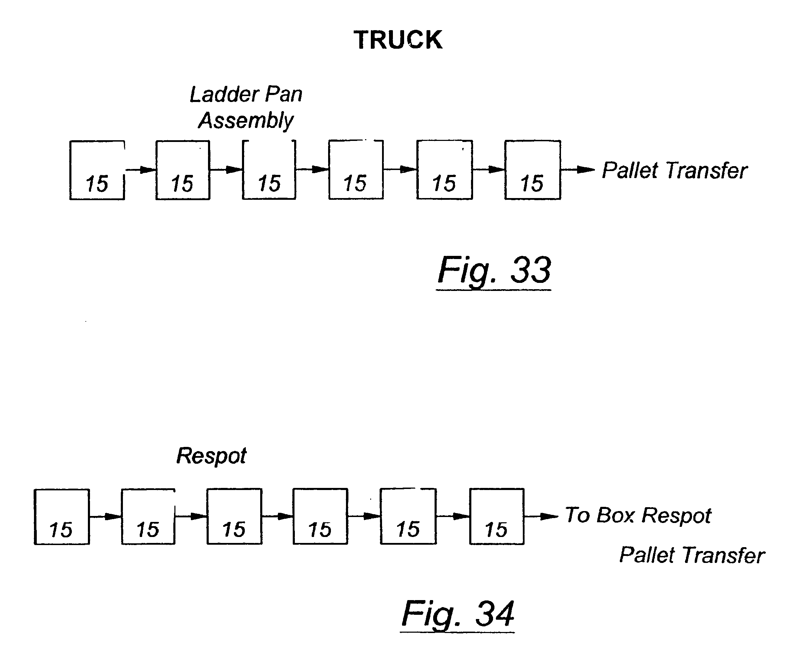

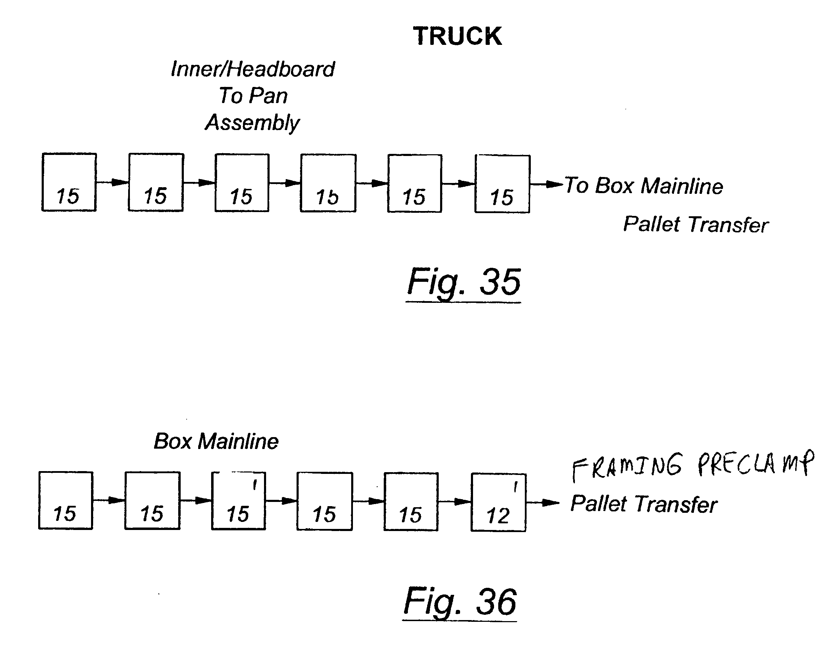

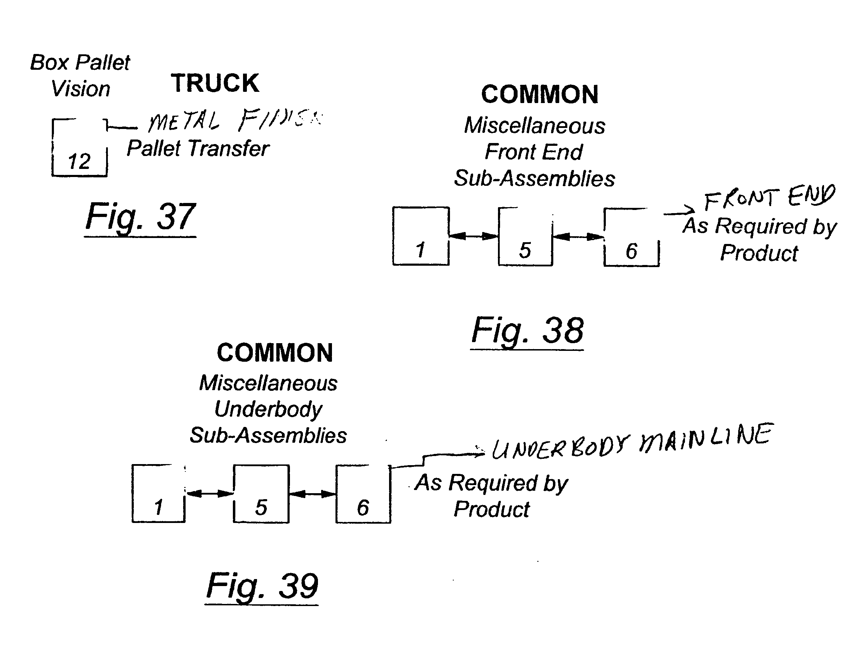

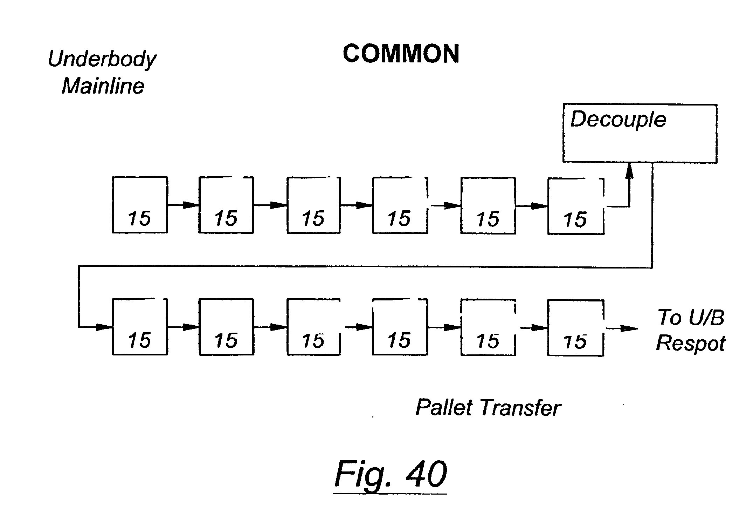

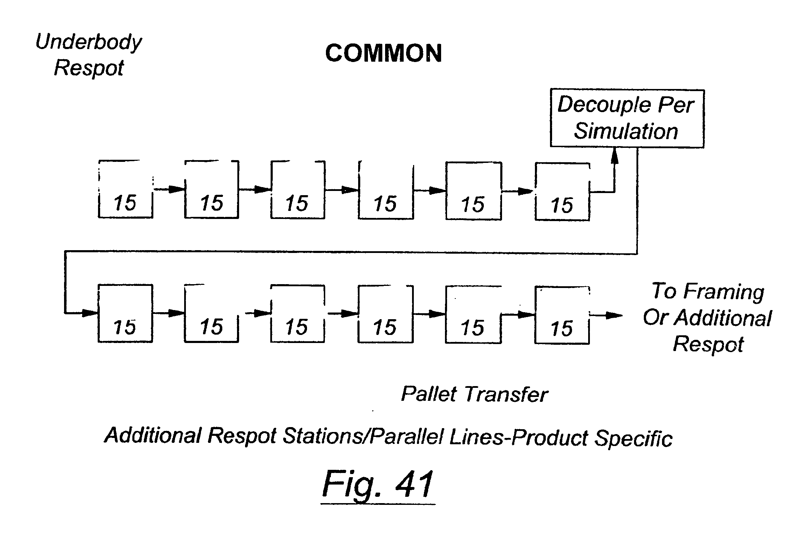

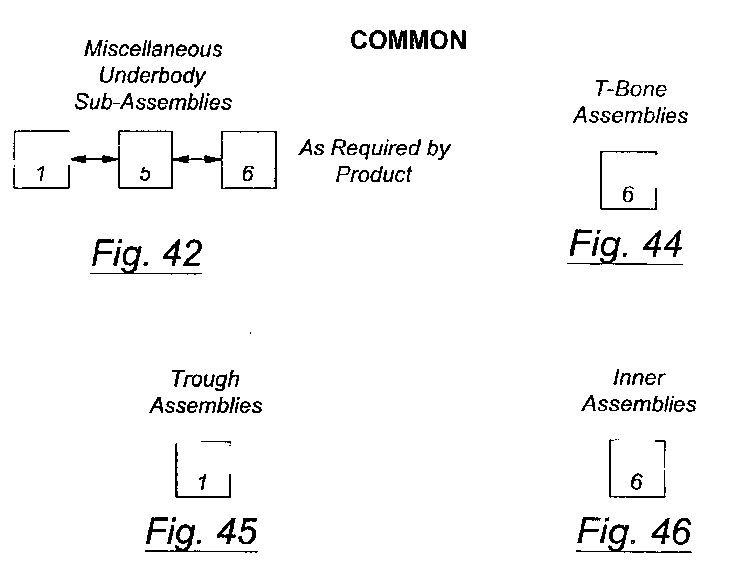

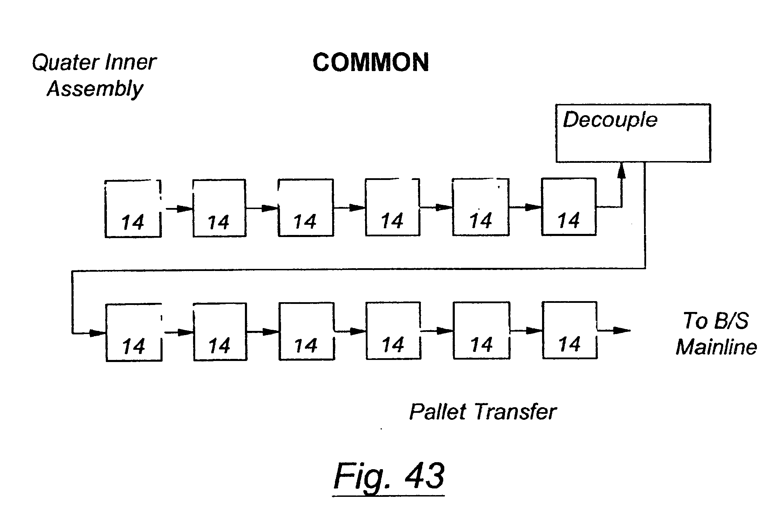

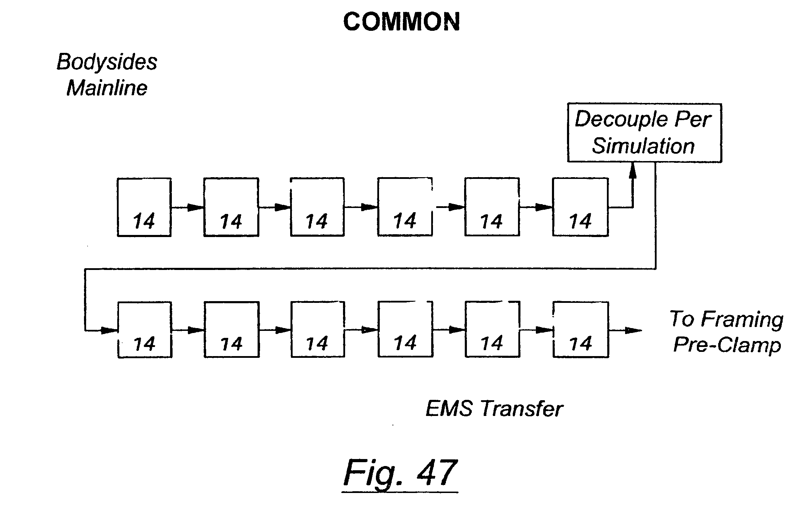

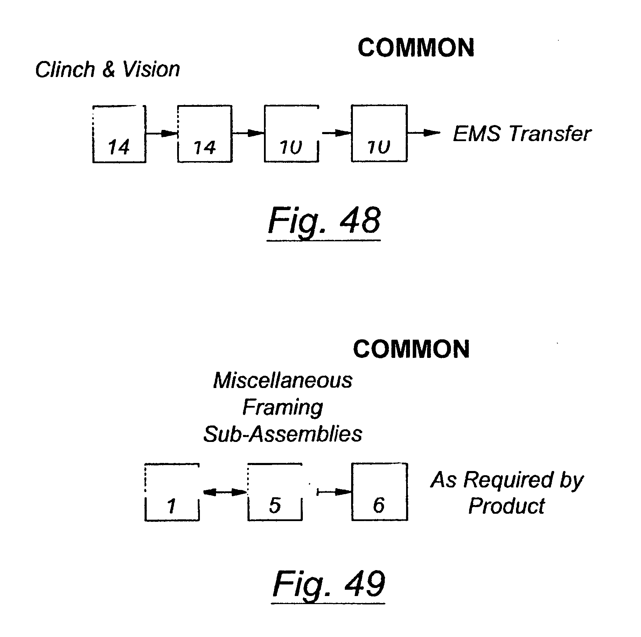

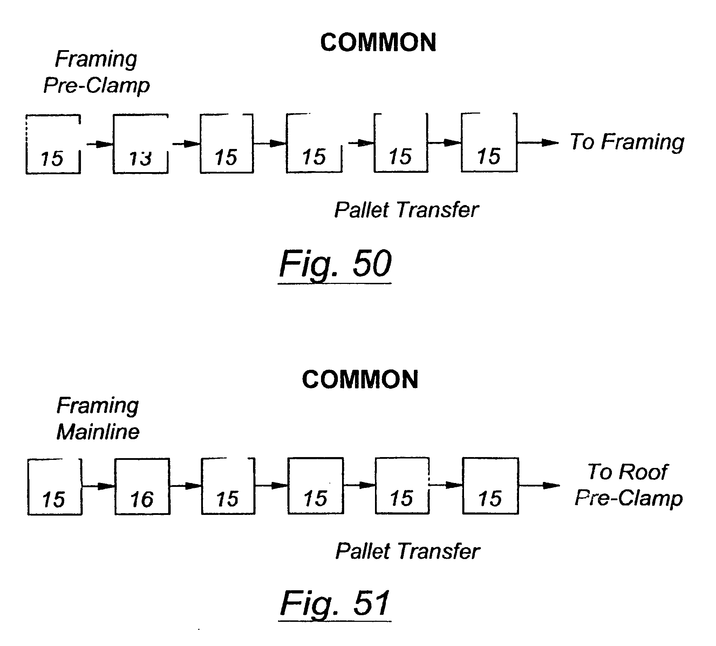

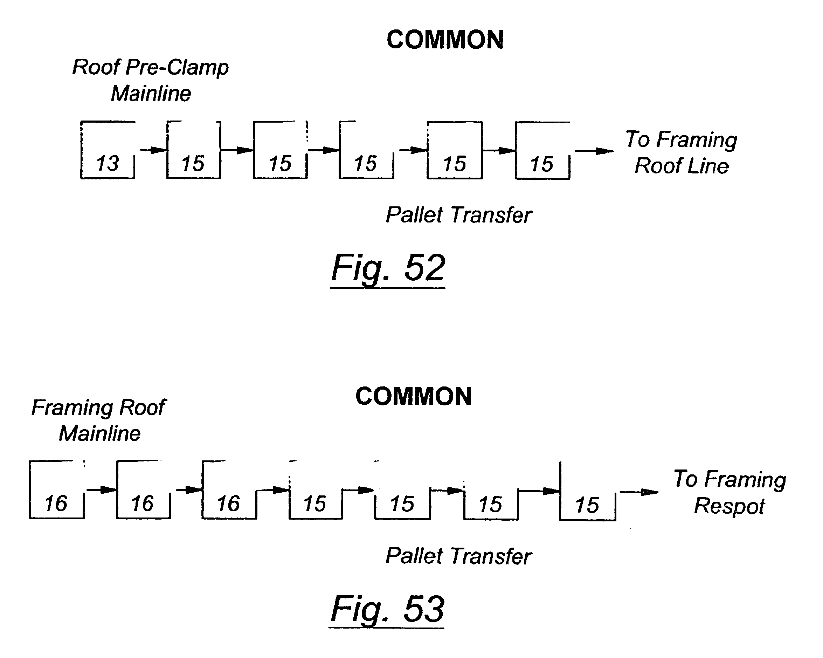

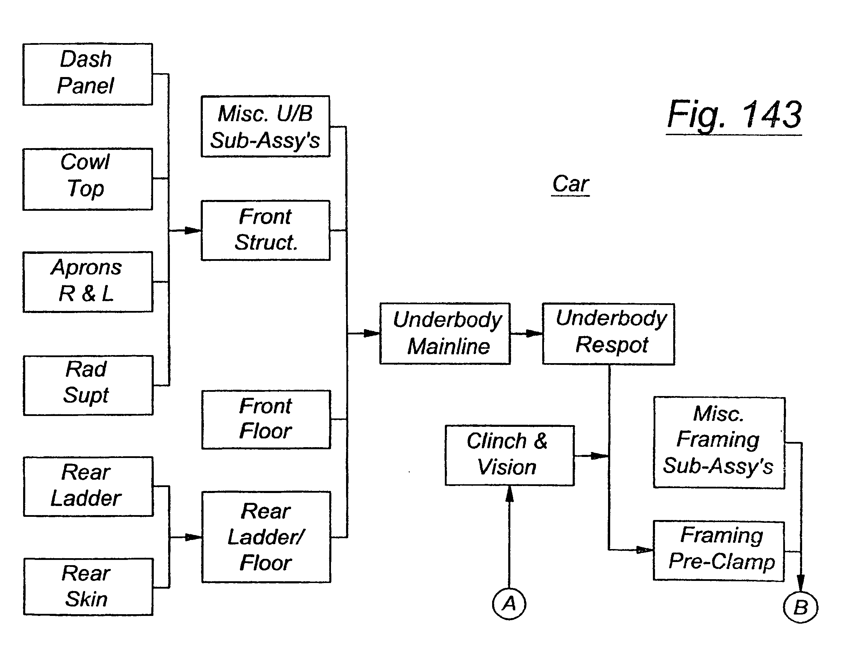

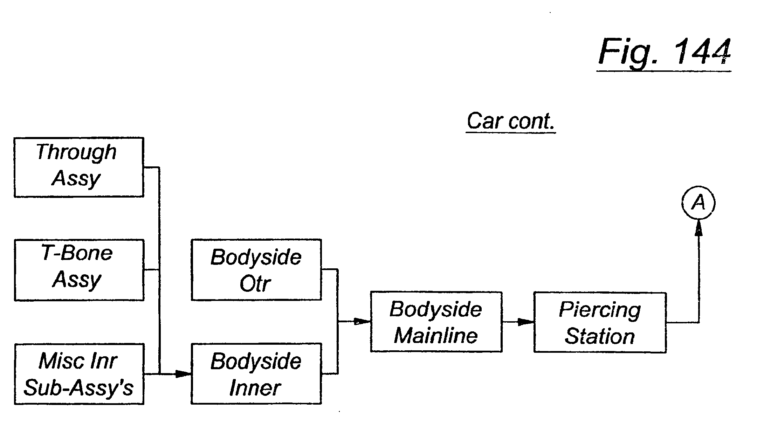

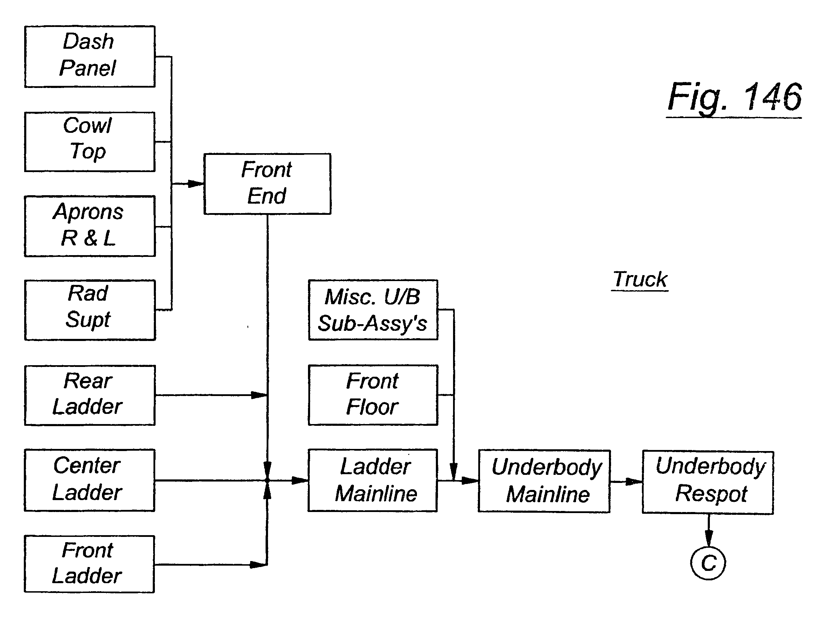

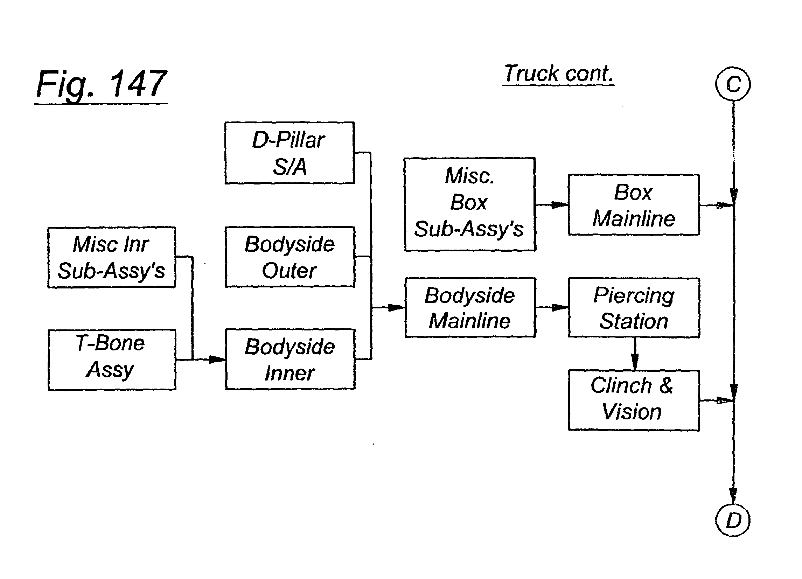

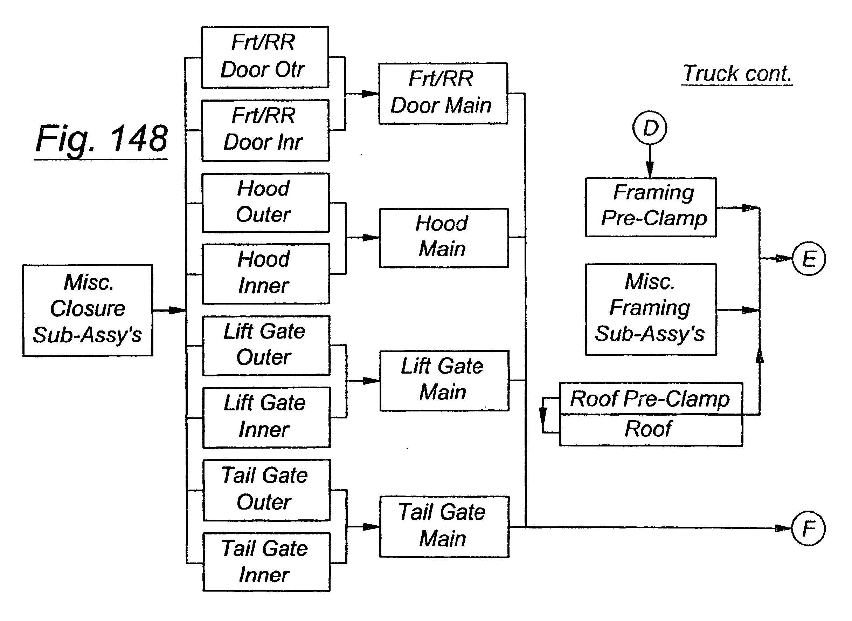

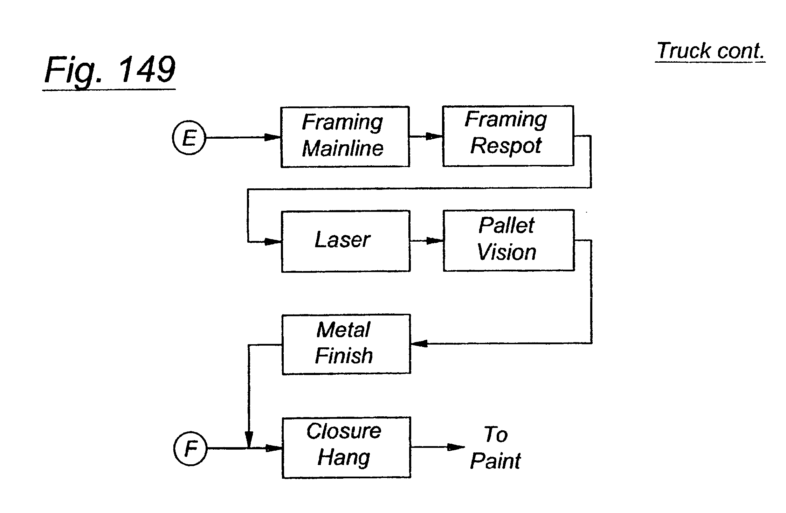

Templates of subassemblies shown in Figures 10-18 are discrete for car body assemblies. Templates of subassemblies shown in Figures 19-37 are discrete for truck body assemblies. Templates shown in Figures 37-52 are common to car and truck bodies. By combining the templates in a predetermined manner, the process lines as shown in Figures 143-145 and 146-149 for the materially different cars and trucks are provided, resulting in a vehicle body which is delivered to the paint shop.

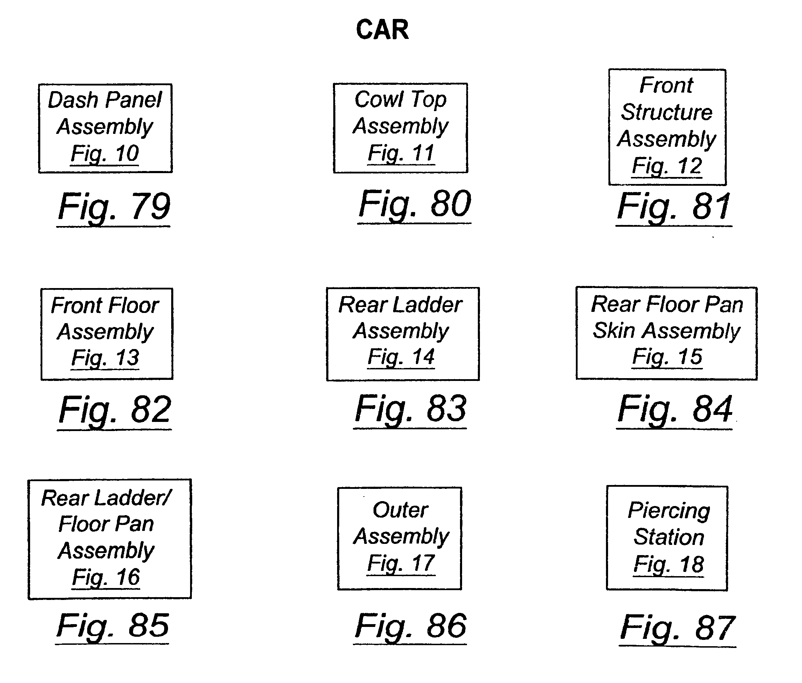

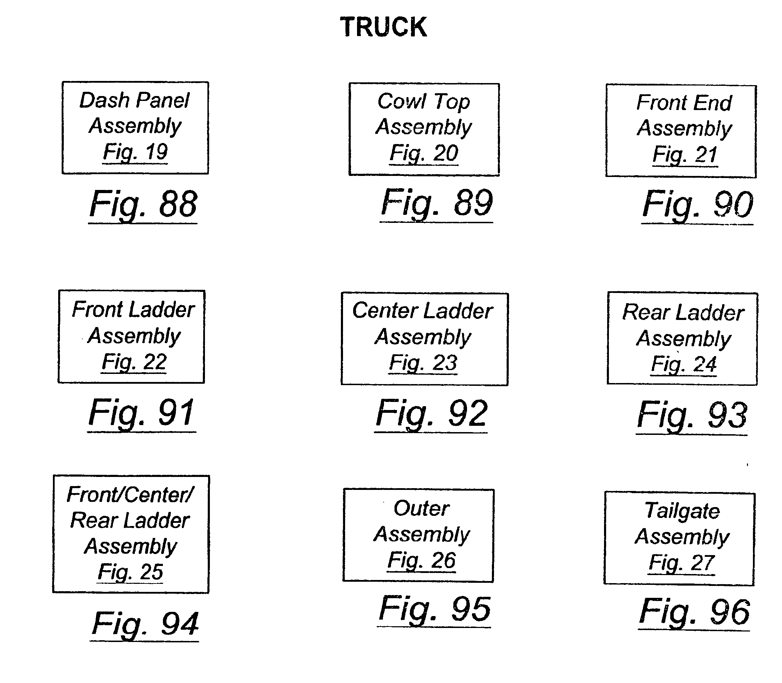

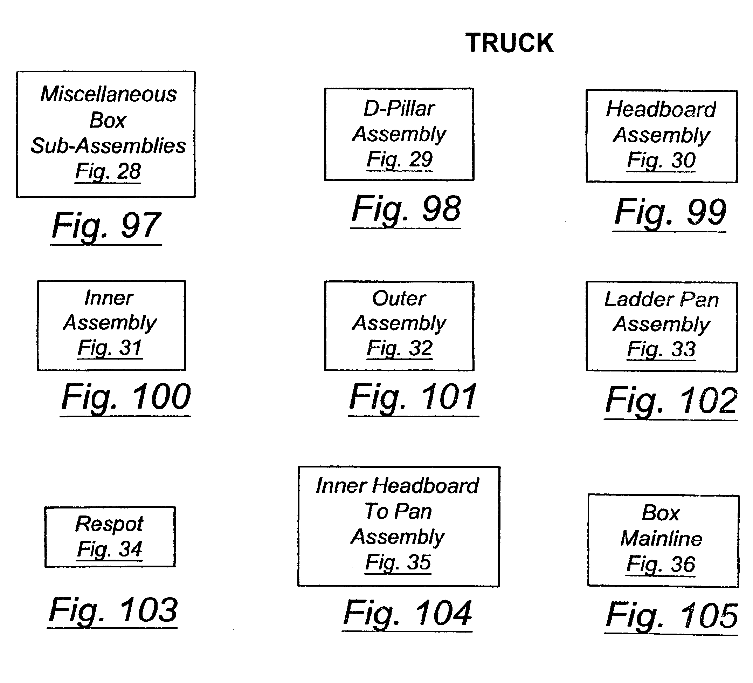

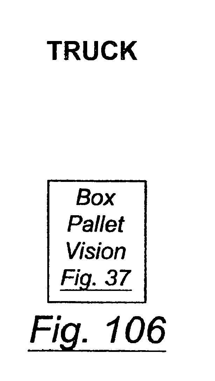

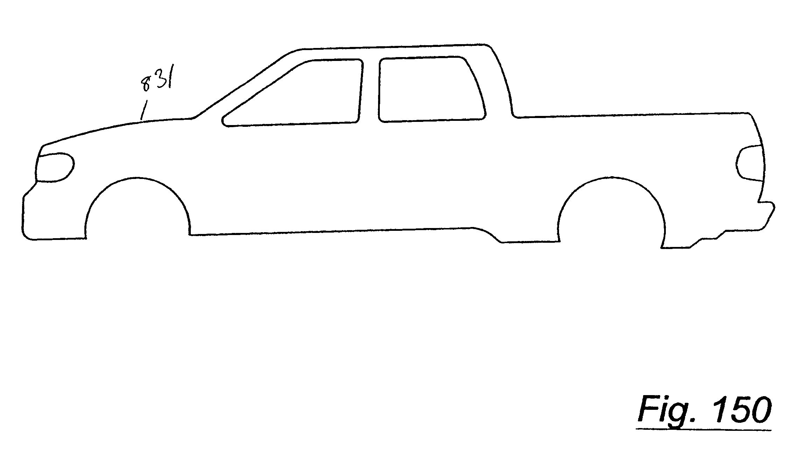

Referring to Figures 79-87, the flexible manufacturing system of the present invention has a first set of templates drawn from a set of standardized task stations for manufacturing subassemblies of a portion of a first type of vehicle. In like manner, Figures 97-105 provide templates drawn from a defined set of task stations utilized to form a process line for certain subassemblies of a second type of vehicle which materially differs from the first type of vehicle. It should be noted that the subassemblies of Figure 1 are not just for one first type of vehicle, which in the instance is a passenger car, but it can be for a family of passenger cars. In like manner, the templates noted in Figures 88-106 are for a family of truck vehicles 831 (Figure 150).

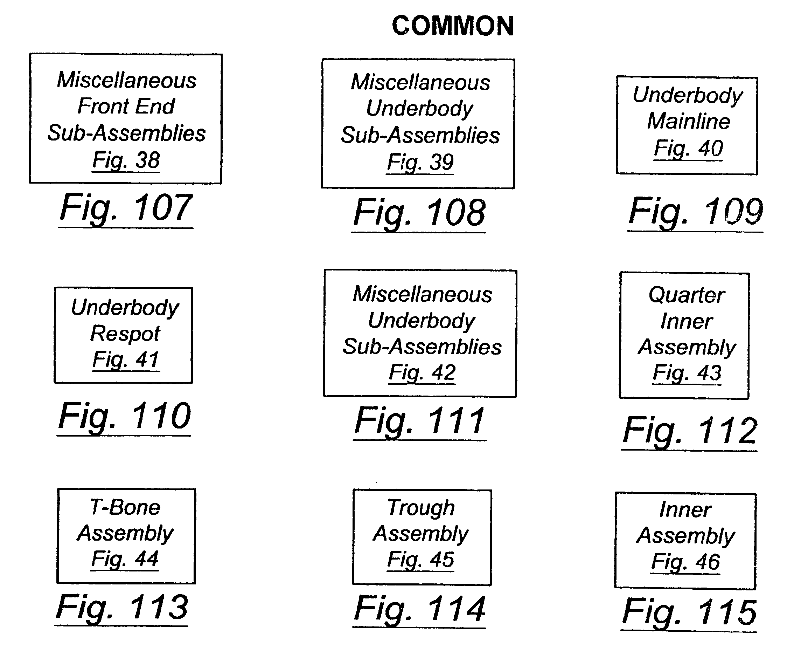

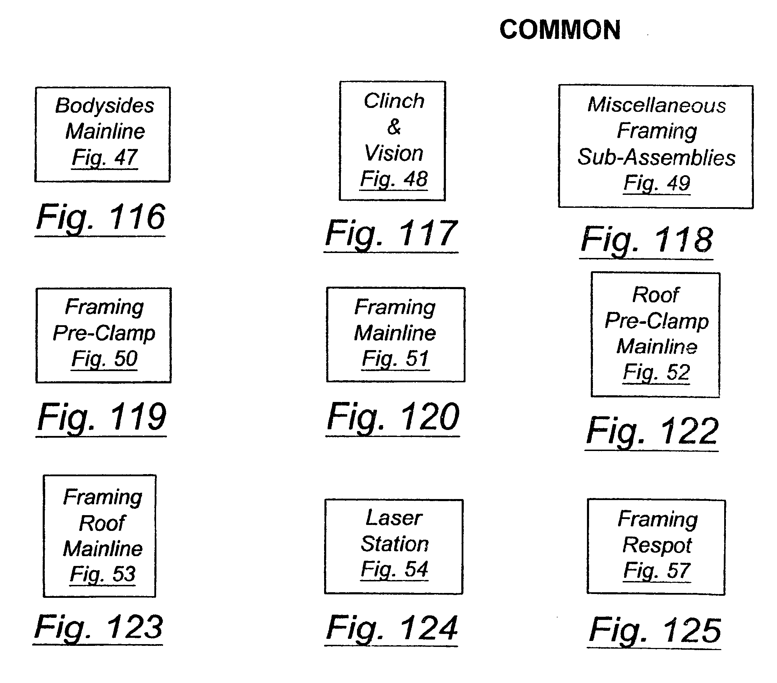

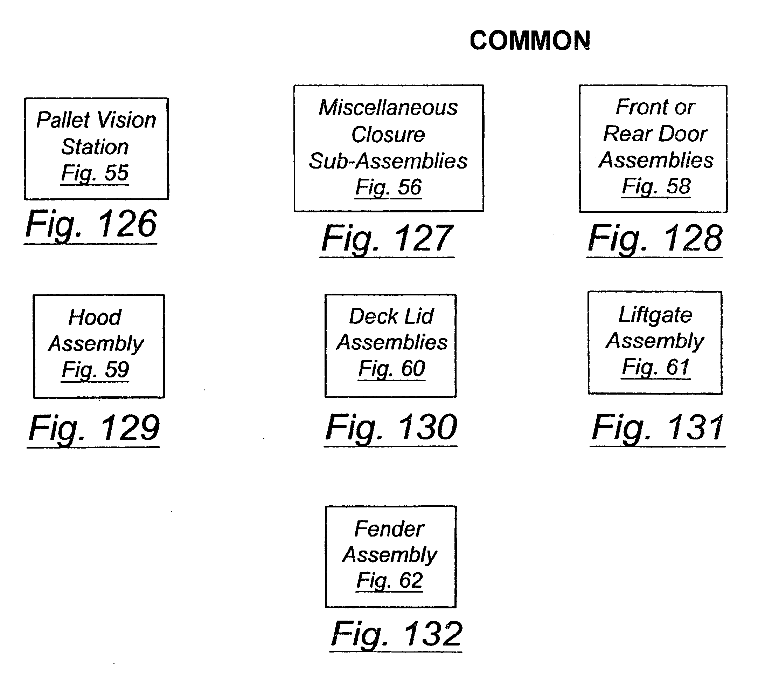

Figures 107-132 are a listing of templates which have been determined to be common for a process line for making cars and for producing trucks. In engineering a process line, if it is desirable to produce cars, templates of Figures 79-87 will be combined to form the process line. If it is desirable to produce trucks, templates of Figures 89-106 will be combined to produce the process line. The templates which are discrete to cars and the templates which are discrete to trucks will both be combined with the templates of Figures 107-132 which are common to both sets of assemblies if it is desirable for the process line to produce both types of vehicle bodies. In some instances, a space can be reserved in a template for future models.

As mentioned previously, although the sets of vehicle assemblies have been explained in a situation of passenger cars and trucks, in other instances the families of vehicles will differ in that one family will be rear-wheel drive and the other family will be front-wheel drive. Another variation is for vehicles having a unibody construction and vehicles having a body mounted on frame type construction.

Therefore in summary the present invention provides a method of engineering a process line for fabricating an assembly from a plurality of subassemblies generated from various workpieces. The method of the present invention includes a step of providing a plurality of standardized task stations. A determination is made of at least first and second templates. Each template comprises a defined set of task stations for producing a subassembly. A combination of templates which includes at least the first and second templates in a predetermined alignment is made to form the process line to fabricate the assembly.

The present invention provides an advantage in that engineering costs are significantly reduced due to the standardization of task stations.

Although various embodiments of the present invention have been shown in the application of a process line for automotive vehicle car bodies, it will be apparent to those skilled in the art that various modifications and changes could be made to the embodiments shown and described without departing from the scope of the invention.

## Claims

1. A method of engineering a flexible process line capable of producing at least two assemblies differing from one another from a plurality of subassemblies generated from various workpieces **characterised in that** the method comprises providing a plurality of standardized task stations (TS1 to TS16), determining at least first and second templates, each template comprising a pre-defined set of task stations for producing a subassembly, each of the task stations in a pre-defined set being unique from all other task stations in the predefined set and at least one of the task stations has a workpiece presenter (50) with tooling plates (7) to fixture at least a first workpiece and a second workpiece differing from the first workpiece and at least one of the task stations is capable of changing from tooling utilized to operate on a first assembly workpiece to tooling utilized to operate on a second assembly workpiece, arranging the task stations in a predetermined order and combining at least said first and second templates in a predetermined alignment to form said process line to fabricate said assembly.

2. A method as claimed in claim 1 wherein the method further comprises the steps of determining a plurality of transfer stations to move assembly parts between the task stations, determining a plurality of transfer stations to move assembly parts between the templates, determining a placement of a storage station between task stations and determining a placement of a storage station between templates of the process line.

3. A method as claimed in claim 1 or in claim 2 wherein the method is a method for fabricating an automotive vehicle body assembly from a plurality of subassemblies generated from various workpieces and at least one of the task stations includes a workpiece presenter (50) for fixturing a workpiece of a vehicle sub-assembly, the workpiece presenter (50) including a platform (60) and a tooling plate (7) removably connected to the platform (60), the tooling plate (7) including a planar body (10) for supporting fixture tools (32,34) holding the workpiece and including a connector mechanism to allow the planar body (10) to be removably connected with the platform (60) and the tooling plate (7) having a three axis abutment system heel (70, 72, 74) which locates the planar body (10) with respect to the platform (60) in a repeatable manner and wherein the task station joins at least first and second workpieces together.

4. A method as claimed in any of claims 1 to 3 wherein the step of providing a plurality of standardized task stations further includes the step of providing a limited number of standardized stations, with at least one of the standardized stations comprising at least one workpiece presenter (50) with at least one tooling plate (7) removably connected to the workpiece presenter.

5. A method as claimed in claim 3 or in claim 4 wherein the method further comprises providing a plurality of tooling plates on the workpiece presenter.

6. A manufacturing system for making an assembly from a plurality of workpieces **characterised in that** the system comprises a plurality of templates arranged in a defined sequence such that a portion of the assembly is formed at each template, each template being formed from a set of standardized task stations (TS1 to TS16), each of the task stations (TS1 to TS16) in the set being unique from all other task stations (TS1 to TS16) in the set and each of the task stations (TS1 to TS16) being aligned in a predetermined order to form a process line to fabricate the assembly, each standardized task station (TS1 to TS16) having a workpiece presenter that supports the workpiece in a predefined spatial orientation and a processing tool for performing an operation on the workpiece.

7. A system as claimed in claim 6 wherein there are sixteen unique task stations (TS1 to TS16).

8. A system as claimed in claim 7 wherein the sixteen tasks stations comprise a first task station (TS1) in which the workpiece presenter includes a table top fixture having a tilt platform (402) and the processing tool is selected from a group comprising of a welder (436) and a gripper, a second task station (TS2) in which the standardized workpiece presenter includes a hexapod manipulator having six electrically driven computer controlled ball screws (409) and the processing tool is selected from a group comprising of a pedestal welder (418), a sealant dispensing unit and a projection weld gun, a third task station (TS3) in which the workpiece presenter is a robot (424) for positioning a workpiece and the processing tool is selected from a group comprising a pedestal welder, a sealant dispensing unit and a projection weld gun, a fourth task station (TS4) is a dual task station having a seventh axis slide to increase the work envelope of a robot (432) and the processing tool is a welding gun, a fifth task station (TS5) in which the workpiece presenter includes a multiple sided trunnion fixture (442) adapted to rotate about a horizontal axis and having a plurality of fixtures (444) for receiving a plurality of workpieces and the processing tool is selected from the group comprising a welding robot and a sealant applicator, a sixth task station (TS6) in which the standardized workpiece presenter includes a multiple sided turntable fixture (460) adapted to rotate about a vertical axis and having a plurality of fixtures (450) for a plurality of workpieces and the processing tool is a robotic welder (464), a seventh task station (TS7) in which the workpiece presenter includes an indexing shuttle (470) having at least two independently controlled fixtures (468) for at least two workpieces and the processing tool is selected from a group comprising of a welding robot, a machining robot (472) and a sealing robot, an eighth task station (TS8) in which the workpiece presenter includes a roller bed (482) for supporting a pallet that supports a fixture for a workpiece and the standardized processing tool is a laser welding robot (484), a ninth task station (TS9) in which the workpiece presenter includes a press welding fixture (486), a tenth task station (TS10) in which the workpiece presenter is a robotic handler and the processing tool is selected from a group comprising a hemming tool, a clinching tool and a piercing tool, an eleventh task station (TS11) in which the workpiece presenter includes an indexing shuttle (515) and a sliding tool plate (514) disposed on the indexing shuttle (515) and the processing tool is selected from a group comprising a welding robot, a material handling robot, a sealant dispenser and an adhesive dispenser, a twelfth task station (TS12) in which the workpiece presenter includes a pallet (525) that is received on a roller bed (526) and the processing tool is an optical measuring device, a thirteenth task station (TS13) which is a sealer applying task station in which the workpiece presenter includes a pallet that is received on a roller bed and the processing tool is selected from a group comprising a sealant dispenser, a mastic dispenser and an adhesive dispenser, a fourteenth task station (TS14) which is a welding station in which the workpiece presenter includes dual shuttling tooling plates mounted on a shuttle drive (504), a fifteenth task station (TS15) in which the workpiece presenter includes a pallet that is received on a roller bed (492) and the standardized processing tool is a welding robot, sealing robot or adhesive application robot and a sixteenth task station (TS16) is a framer for joining a vehicle body side to an underbody and the workpiece presenter is a pallet on a roller bed (550).

9. A system as claimed in any of claims 6 to 8 wherein the system further comprises a storage station adapted to couple at least two standardized task stations (TS1 to TS16).

10. A system as claimed in any of claims 6 to 9 wherein the system further comprises a transfer station (555) adapted to move the assembly between at least two standardized task stations (TS1 to TS16).

11. A system as claimed in any of claims 6 to 10 wherein the assembly is an automotive vehicle.

## Patentansprüche

1. Ein Verfahren zur Konstruktion einer flexiblen Prozeßlinie, die in der Lage ist mindestens zwei voneinander abweichende Aufbauten aus einer Mehrzahl von aus verschiedenen Werkstücken erzeugten Untergruppen zu erzeugen; **dadurch gekennzeichnet, daß** das Verfahren es umfaßt eine Mehrzahl standartisierter Arbeitsaufgaben-Stationen (TS1 bis TS16) bereitzustellen; mindestens erste und zweite Schablonen zu bestimmen, wobei jede Schablone einen vorherbestimmten Satz von Arbeitsaufgaben-Stationen zur Produktion einer Untergruppe umfaßt; und jede der Arbeitsaufgaben-Stationen in einem vorherbestimmten Satz gegenüber allen anderen Arbeitsaufgaben-Stationen in dem vorherbestimmten Satz einzigartig ist, und mindestens eine der Arbeitsaufgaben-Stationen einen Werkstück-Vorleger (50) mit Werkzeugplatten (7) besitzt, um mindestens ein erstes Werkstück und ein sich von dem ersten Werkstück unterscheidendes zweites Werkstück zu fixieren; und mindestens eine der Arbeitsaufgaben-Stationen in der Lage ist um von den Werkzeugen, die eingesetzt werden um an einem ersten Werkstück des Aufbaus zu arbeiten, zu Werkzeugen zu wechseln, die eingesetzt werden um an einem zweiten Werkstück des Aufbaus zu arbeiten; und die Arbeitsaufgaben-Stationen in einer vorherbestimmten Reihenfolge anzuordnen und mindestens diese ersten und zweiten Schablonen in einer vorherbestimmten Ausrichtung zu kombinieren, um diese Prozeßlinie zur Herstellung dieses Aufbaus zu bilden.

2. Ein Verfahren wie in Anspruch 1 beansprucht, in dem das Verfahren weiterhin die Schritte einschließt eine Mehrzahl von Transfer- bzw. Umschlagstationen zu bestimmen, um Aufbauteile zwischen den Arbeitsaufgaben-Stationen zu bewegen; eine Mehrzahl von Transfer- bzw. Umschlagstationen zu bestimmen, um Aufbauteile zwischen den Schablonen zu bewegen; eine Plazierung einer Lagerstation zwischen Arbeitsaufgaben-Stationen zu bestimmen; und eine Plazierung einer Lagerstation zwischen Schablonen der Prozeßlinie zu bestimmen.

3. Ein Verfahren wie in Anspruch 1 oder in Anspruch 2 beansprucht, in dem das Verfahren zur Herstellung eines Kraftfahrzeug-Karosserieaufbaus aus einer Mehrzahl von aus verschiedenen Werkstücken erzeugten Untergruppen ist, und mindestens eine der Arbeitsaufgaben-Stationen einen Werkstück-Vorleger (50) einschließt, um ein Werkstück einer Fahrzeug-Untergruppe zu fixieren; wobei der Werkstück-Vorleger (50) eine Plattform (60) und eine entfernbar mit der Plattform (60) verbundene Werkzeugplatte (7) einschließt; die Werkzeugplatte (7) einen planaren Körper (10) einschließt um das Werkstück haltende Spannwerkzeuge (32, 34) zu tragen; und einen Verbindungsmechanismus einschließt, um es dem planaren Körper (10) zu erlauben entfernbar mit der Plattform (60) verbunden zu sein; und die Werkzeugplatte (7) eine Dreiachsen-Anstoßsystem-Auflage (70, 72, 74) aufweist, welche den planaren Körper (10) hinsichtlich der Plattform (60) in wiederholbarer Art und Weise lokalisiert oder zentriert, und worin die Arbeitsaufgaben-Station mindestens erste und zweite Werkstücke miteinander verbindet.

4. Ein Verfahren wie in einem der Ansprüche 1 bis 3 beansprucht, in dem der Schritt der Bereitstellung einer Mehrzahl standartisierter Arbeitsaufgaben-Stationen weiterhin den Schritt einschließt eine begrenzte Anzahl standartisierter Stationen bereitzustellen, wobei mindestens eine der standartisierten Stationen mindestens einen Werkstück-Vorleger (50) mit mindestens einer entfernbar mit dem Werkstück-Vorleger verbundenen Werkzeugplatte (7) umfaßt.

5. Ein Verfahren wie in Anspruch 3 oder in Anspruch 4 beansprucht, in dem das Verfahren es weiterhin umfaßt eine Mehrzahl von Werkzeugplatten auf dem Werkstück-Vorleger bereitzustellen.

6. Ein Fertigungssystem zur Herstellung eines Aufbaus aus einer Mehrzahl von Werkstücken, **dadurch gekennzeichnet daß** das System eine Mehrzahl von in einer definierten Abfolge angeordneten Schablonen derart umfaßt, daß an jeder Schablone ein Abschnitt des Aufbaus gebildet wird; jede Schablone aus einem Satz standartisierter Arbeitsaufgaben-Stationen (TS1 bis TS 16) gebildet wird; jede der Arbeitsaufgaben-Stationen (TS1 bis TS16) gegenüber allen anderen Arbeitsaufgaben-Stationen (TS1 bis TS16) einzigartig ist; und jede der Arbeitsaufgaben-Stationen (TS1 bis TS16) in einer vorherbestimmten Reihenfolge ausgerichtet wird, um eine Prozeßlinie zur Herstellung des Aufbaus zu bilden; wobei jede standartisierte Arbeitsaufgaben-Station (TS1 bis TS16) einen Werkstück-Vorleger aufweist, der das Werkstück in einer vorherbestimmten räumlichen Orientierung trägt; und ein Verarbeitungswerkzeug zur Verrichtung einer Tätigkeit an dem Werkstück.

7. Ein System wie in Anspruch 6 beansprucht, in dem es sechzehn einzigartige Arbeitsaufgaben-Stationen (TS1 bis TS16) gibt.

8. Ein System wie in Anspruch 7 beansprucht, in dem die sechzehn Arbeitsaufgaben-Stationen eine erste Arbeitsaufgaben-Station (TS1) umfassen, in welcher der Werkstück-Vorleger eine Tischplatten-Fixierung einschließt, die eine Kipp-Plattform (402) aufweist, und das Verarbeitungswerkzeug wird aus einer einen Schweißer (436) und einen Greifer umfassenden Gruppe ausgewählt; eine zweite Arbeitsaufgaben-Station (TS2), in welcher der standartisierte Werkstück-Vorleger einen Sechsbein-Manipulator einschließt, der sechs elektrisch angetriebene, computergesteuerte Kugelgewindetriebe (409) aufweist, und das Verarbeitungswerkzeug wird aus einer Gruppe ausgewählt die aus einem Sockelschweißgerät (418), einer Dichtmittel-Dispensereinheit und einer Warzenschweißpistole besteht; eine dritte Arbeitsaufgaben-Station (TS3), in welcher der Werkstück-Vorleger ein Roboter (424) zur Positionierung eines Werkstücks ist und das Verarbeitungswerkzeug aus einer Gruppe ausgewählt ist, die ein Punktschweißgerät, eine Dichtmittel-Dispensereinheit und eine Warzenschweißpistole umfaßt; eine vierte Aurbeitsaufgaben-Station (TS4) ist eine Doppel-Arbeitsaufgaben-Station, die einen Siebenachsen-Schlitten besitzt, um die Arbeits-Hüllkurve eines Roboters (432) auszudehnen, und das Verarbeitungsverkzeug ist eine Schweißpistole; eine fünfte Arbeitsaufgaben-Station (TS5), in welcher der Werkstück-Vorleger eine mehrseitige Zapfen-Spannvorrichtung (442) einschließt, die angepaßt ist um sich um eine Horizontalachse zu drehen und eine Mehrzahl von Spannvorrichtungen (444) aufweist, um eine Mehrzahl von Werkstücken aufzunehmen, und das Verarbeitungswerkzeug wird aus der einen Schweißroboter und einen Dichtmittel-Appliziereinrichtung umfassenden Gruppe ausgewählt; eine sechste Arbeitsaufgaben-Station (TS6), in welcher der standartisierte Werkstück-Vorleger eine mehrseitige Drehtisch-Spannvorrichtung (460) einschließt, die angepaßt ist um sich um eine vertikale Achse zu drehen und eine Mehrzahl von Spannvorrichtungen (450) für eine Mehrzahl von Werkstücken aufweist, und das Verarbeitungswerkzeug ist ein Schweißroboter (464); eine siebte Arbeitsaufgaben-Station (TS7), in welcher der Werkstück-Vorleger eine Indizier-Pendelvorrichtung (470) einschließt, die mindestens zwei unabhängig gesteuerte Spannvorrichtungen (468) für mindestens zwei Werkstücke aufweist, und das Verarbeitungswerkzeug ist aus einer einen Schweißroboter, einen Bearbeitungsroboter (472) und einen Abdichtroboter umfassenden Gruppe ausgewählt; eine achte Arbeitsaufgaben-Station (TS8), in welcher der Werkstück-Vorleger ein Rollenbett (482) einschließt um eine Palette zu tragen, die eine Spannvorrichtung für ein Werkstück trägt, und das standartisierte Verarbeitungswerkzeug ist ein Laser-Schweißroboter (484); eine neunte Arbeitsaufgaben-Station (TS9), in welcher der Werkstück-Vorleger eine Preßschweiß-Spannvorrichtung (486) einschließt; eine zehnte Arbeitsaufgaben-Station (TS10), in welcher der Werkstück-Vorleger ein Handhabungsroboter ist und das Verarbeitungswerkzeug aus einer Gruppe ausgewählt ist, die ein Einfaßwerkzeug, ein Clinchwerkzeug und ein Durchstechwerkzeug umfaßt; eine elfte Arbeitsaufgaben-Station (TS11), in welcher der Werkstück-Vorleger eine Indizier-Pendelvorrichtung (515) und eine auf der Indizier-Wechselvorrichtung (515) angeordnete, gleitende Werkzeugplatte (514) einschließt, und das Verarbeitungswerkzeug aus einer Gruppe ausgewählt ist, die einen Schweißroboter, einen Material-Handhabungsroboter, einen Abdichtmittel-Dispenser und einen Klebstoffdispenser umfaßt; eine zwölfte Arbeitsaufgaben-Station (TS12), in welcher der Werkstück-Vorleger eine Palette (525) einschließt, die auf einem Rollenbett (526) aufgenommen wird, und das Verarbeitungswerkzeug eine optische Meßvorrichtung ist; eine dreizehnte Arbeitsaufgaben-Station (TS13), welche eine Dichtmittel aufbringende Arbeitsaufgaben-Station ist, in welcher der Werkstück-Vorleger eine Palette einschließt, die auf einem Rollenbett aufgenommen ist und das Verarbeitungswerkzeug aus einer Gruppe ausgewählt ist, die einen Dichtmittel-Dispenser, einen Mastix-Dispenser und einen Klebstoff-Dispenser umfaßt; eine vierzehnte Arbeitsaufgaben-Station (TS14), welche eine Schweißstation ist, in welcher der Werkstück-Vorleger auf einem Pendelantrieb (504) montierte Doppel-Wechselwerkzeugplatten einschließt; eine fünfzehnte Arbeitsaufgaben-Station (TS15), in welcher der Werkstück-Vorleger eine Palette einschließt, die auf einem Rollenbett (492) aufgenommen wird, und das standartisierte Verarbeitungswerkzeug ist ein Schweißroboter, Abdichtroboter oder Klebstoff-Auftragroboter; und eine sechzehnte Arbeitsaufgaben-Station (TS16) ist ein Rahmer, um eine Fahrzeug-Karosserieseite mit einer Bodengruppe zu verbinden, und der Werkstück-Vorleger ist eine Palette auf einem Rollenbett (550).

9. Ein System wie in irgendeinem der Ansprüche 6 bis 8 beansprucht, in dem das System weiterhin eine Lagerstation umfaßt, die angepaßt ist um mindestens zwei standartisierte Arbeitsaufgaben-Stationen (TS1 bis TS16) zu koppeln.

10. Ein System wie in irgendeinem der Ansprüche 6 bis 9 beansprucht, in dem das System weiterhin eine Umschlagstation (555) umfaßt, die angepaßt ist um den Aufbau zwischen mindestens zwei standartisierten Arbeitsaufgaben-Stationen (TS1 bis TS16) bewegen.

11. Ein System wie in irgendeinem der Ansprüche 6 bis 9 beabsprucht, in dem der Aufbau ein Kraftfahrzeug ist.

## Revendications

1. Procédé de réalisation d'une chaîne de production flexible capable de produire au moins deux ensembles différents à partir d'une pluralité de sous-ensembles obtenus à partir de diverses pièces, **caractérisé en ce qu'**il comprend les étapes consistant à :
fournir une pluralité de postes de tâche normalisés ou standardisés (TS1 à TS16),
déterminer au moins un premier modèle ou gabarit et un deuxième modèle ou gabarit, chaque modèle ou gabarit comprenant un jeu prédéfini de postes de tâche de production d'un sous-ensemble, chaque poste de tâche d'un jeu prédéfini étant distinct de tous les autres postes de tâche du jeu prédéfini et un poste de tâche au moins étant équipé d'un présentoir de pièce (50) muni de plaques d'outillage (7) pour brider ou fixer au moins une première pièce et une deuxième pièce différente de la première, l'un au moins des postes de tâche étant capable de passer de l'outillage utilisé pour fonctionner sur une pièce d'un premier ensemble à l'outillage utilisé pour fonctionner sur une pièce d'un deuxième ensemble,
disposer les postes de tâche dans un ordre prédéterminé et
combiner au moins lesdits premier et deuxième modèles selon un alignement prédéterminé pour former ladite chaîne de production pour fabriquer ledit ensemble.

2. Procédé selon la revendication 1 comprenant en outre les étapes consistant à
déterminer une pluralité de postes de transfert pour déplacer les pièces des ensembles entre les postes de tâche,
déterminer une pluralité de postes de transfert pour déplacer les pièces des ensembles entre les modèles,
déterminer un placement d'un poste de stockage entre des postes de tâche et
déterminer un placement d'un poste de stockage entre des modèles de la chaîne de production.

3. Procédé selon la revendication 1 ou 2 destiné à fabriquer un ensemble de carrosserie d'un véhicule automobile à partir d'une pluralité de sous-ensembles générés à partir de diverses pièces et dans lequel au moins un des postes de tâche comprend un présentoir de pièce (50) pour le bridage d'une pièce d'un sous-ensemble de véhicule, le présentoir de pièce (50) comprenant une plate-forme (60) et une plaque d'outillage (7) reliée de façon amovible à la plate-forme (60), la plaque d'outillage (7) comprenant un corps plan (10) destiné à soutenir les outils de bridage (32, 34) qui maintiennent la pièce et comprenant un mécanisme connecteur permettant de relier de façon amovible le corps plan (10) à la plate-forme (60), la plaque d'outillage (7) étant munie d'un talon de système de butée trois axes (70, 72, 74) qui localise le corps plan (10) par rapport à la plate-forme (60) d'une manière reproductible et dans lequel le poste de tâche réunit au moins la première et la deuxième pièce.

4. Procédé selon l'une des revendications 1 à 3 dans lequel l'étape consistant à fournir une pluralité de postes de tâche normalisés comprend en outre l'étape consistant à fournir un nombre limité de postes normalisés, l'un au moins des postes normalisés comprenant au moins un présentoir de pièce (50) auquel une plaque d'outillage (7) est reliée de façon amovible.

5. Procédé selon la revendication 3 ou 4 comprenant en outre la fourniture d'une pluralité de plaques d'outillage sur le présentoir de pièce.

6. Système de fabrication destiné à produire un ensemble à partir d'une pluralité de pièces, **caractérisé en ce qu'**il comprend une pluralité de modèles disposés dans un ordre défini de telle sorte qu'une partie de l'ensemble est formée au niveau de chaque modèle, chaque modèle étant formé à partir d'un jeu de postes de tâche normalisés (TS1 à TS16), chaque poste de tâche (TS1 à TS16) du jeu étant distinct de tous les autres postes de tâche (TS1 to TS16) du jeu et étant aligné dans un ordre prédéterminé pour former une chaîne de production destinée à fabriquer l'ensemble, chaque poste de tâche normalisé (TS1 à TS16) étant muni d'un présentoir de pièce soutenant la pièce dans une orientation spatiale prédéfinie et d'un outil de traitement permettant d'effectuer une opération sur la pièce.

7. Système selon la revendication 6 comprenant seize postes de tâche distincts (TS1 à TS16).

8. Système selon la revendication 7 dans lequel les seize postes de tâche comprennent
un premier poste de tâche (TS1) dans lequel le présentoir de pièce comprend une fixation supérieure de table munie d'une plate-forme inclinable (402) et dans lequel l'outil de traitement est sélectionné dans un groupe comprenant un dispositif de soudage (436) et un dispositif de préhension,
un deuxième poste de tâche (TS2) dans lequel le présentoir de pièce normalisé comprend un manipulateur hexapode doté de six vérins à billes électriques commandés par ordinateur (409) et dans lequel l'outil de traitement est sélectionné dans un groupe comprenant un dispositif de soudage sur pied (418), un module distributeur de produit d'étanchéité et un pistolet de soudage par projection,
un troisième poste de tâche (TS3) dans lequel le présentoir de pièce est un robot (424) permettant de positionner une pièce et dans lequel l'outil de traitement est sélectionné dans un groupe comprenant un dispositif de soudage sur pied, un module distributeur de produit d'étanchéité et un pistolet de soudage par projection,
un quatrième poste de tâche (TS4) qui est un poste de tâche double avec glissement en tant que septième axe pour augmenter l'enveloppe de travail d'un robot (432) et dans lequel l'outil de traitement est un pistolet de soudage,
un cinquième poste de tâche (TS5) dans lequel le présentoir de pièce comprend un dispositif de fixation pivotant multiface (442) tournant autour d'un axe horizontal et équipé d'une pluralité de dispositifs de bridage (444) destinés à recevoir une pluralité de pièces et dans lequel l'outil de traitement est sélectionné dans le groupe comprenant un robot de soudage et un module d'application de produit d'étanchéité,
un sixième poste de tâche (TS6) dans lequel le présentoir de pièce normalisé comprend un dispositif de plateau tournant multiface (460) tournant autour d'un axe vertical et équipé d'une pluralité de dispositifs de bridage (450) destinés à recevoir une pluralité de pièces et dans lequel l'outil de traitement est un robot de soudage (464),
un septième poste de tâche (TS7) dans lequel le présentoir de pièce comprend une navette diviseuse (470) équipée d'au moins deux dispositifs de bridage commandés indépendamment (468) pour deux pièces au moins et dans lequel l'outil de traitement est sélectionné dans le groupe comprenant un robot de soudage, un robot d'usinage (472) et un robot d'application de produit d'étanchéité,
un huitième poste de tâche (TS8) dans lequel le présentoir de pièce comprend un convoyeur à rouleaux (482) destiné à soutenir une palette soutenant elle-même une pièce et dans lequel l'outil de traitement normalisé est un robot de soudage laser (484),
un neuvième poste de tâche (TS9) dans lequel le présentoir de pièce comprend un dispositif de bridage pour soudage par pression (486),
un dixième poste de tâche (TS10) dans lequel le présentoir de pièce est un manipulateur robotisé et dans lequel l'outil de traitement est sélectionné dans un groupe comprenant un outil de rabattage, un outil d'agrafage et un outil de perçage,
un onzième poste de tâche (TS11) dans lequel le présentoir de pièce comprend une navette diviseuse (515) et une plaque d'outillage coulissante (514) disposée sur la navette diviseuse (515) et dans lequel l'outil de traitement est sélectionné dans le groupe comprenant un robot de soudage, un robot de manutention de matières, un distributeur de produit d'étanchéité et un distributeur de colle,
un douzième poste de tâche (TS12) dans lequel le présentoir de pièce comprend une palette (525) qui est reçue sur un convoyeur à rouleaux (526) et dans lequel l'outil de traitement est un dispositif de mesure optique,
un treizième poste de tâche (TS13) qui est un poste d'application de produit d'étanchéité, dans lequel le présentoir de pièce comprend une palette qui est reçue sur un convoyeur à rouleaux et dans lequel l'outil de traitement est sélectionné dans un groupe comprenant un distributeur de produit d'étanchéité, un distributeur de mastic et un distributeur de colle,
un quatorzième poste de tâche (TS14) qui est un poste de soudage dans lequel le présentoir de pièce comprend des plaques d'outillage navette doubles montées sur un entraînement de navette (504),
un quinzième poste de tâche (TS15) dans lequel le présentoir de pièce comprend une palette qui est reçue sur un convoyeur à rouleaux (492) et dans lequel l'outil de traitement normalisé est un robot de soudage, un robot d'application de produit d'étanchéité ou un robot d'application de colle, et
un seizième poste de tâche (TS16) qui est un dispositif de montage destiné à assembler un panneau latéral de carrosserie de véhicule avec un soubassement de carrosserie et dans lequel le présentoir de pièce est une palette sur un convoyeur à rouleaux (550).

9. Système selon l'une des revendications 6 à 8 comprenant en outre un poste de stockage conçu pour coupler au moins deux postes de tâche normalisés (TS1 à TS16).

10. Système selon l'une des revendications 6 à 9 comprenant en outre un poste de transfert (555) conçu pour déplacer l'ensemble entre au moins deux postes de tâche normalisés (TS1 à TS16).

11. Système selon l'une des revendications 6 à 10 dans lequel l'ensemble est un véhicule automobile.
